# EUROPEAN PATENT APPLICATION

(11) **EP 4 618 074 A1**
(43) Date of publication of application: **17.09.2025**
(21) Application number: 23909904.7
(22) Date of filing: 29.11.2023
(51) Int. Cl.: G10L 15/22

(54) **INTERACTION METHOD, ELECTRONIC DEVICE, AND MEDIUM**

(30) Priority: 30.12.2022 CN 202211727325
(71) Applicant: Huawei Technologies Co., Ltd., Shenzhen, Guangdong 518129 (CN)
(72) Inventor: DIAO, Meng, Shenzhen, Guangdong 518129 (CN)
(74) Representative: Goddar, Heinz J.
(86) International application number: PCT/CN2023/135194
(87) International publication number: WO 2024/139974

(57) **Abstract**

This application relates to the field of communication technologies, and discloses an interaction method, an electronic device, and a medium. The interaction method includes: A first electronic device establishes a connection to a second electronic device, and the second electronic device displays a first interface, where the first interface includes first display content; the first electronic device detects a wake-up instruction of a voice assistant; the first electronic device sends first data corresponding to the wake-up instruction to the second electronic device, where the first data includes data corresponding to a voice wake-up state animation effect; and the second electronic device displays a second interface based on the first data and the first display content, where the second interface includes the first display content and second display content corresponding to the first data. Based on the foregoing solution, when a user wakes up the voice assistant of the first electronic device, the first electronic device sends only the data corresponding to the voice wake-up state animation effect to the second electronic device. In this way, interaction between the user and an interface of the second electronic device is not interrupted, and user experience is improved.

## Description

This application claims priority to Chinese Patent Application No. 202211727325.0, filed with the China National Intellectual Property Administration on December 30, 2022 and entitled "INTERACTION METHOD, ELECTRONIC DEVICE, AND MEDIUM", which is incorporated herein by reference in its entirety.

### TECHNICAL FIELD

This application relates to the field of communication technologies, and in particular, to an interaction method, an electronic device, and a medium.

### BACKGROUND

With development and popularization of electronic devices such as mobile phones, the electronic devices such as mobile phones have been carried by users anywhere. In addition, with development of vehicle intelligence, an increasing quantity of vehicles are equipped with in-vehicle infotainment systems (or referred to as central control screen systems or in-vehicle infotainments). An upgrade iteration period for a hardware computing capability of the in-vehicle infotainment of the vehicle is long. Therefore, applications and services of the in-vehicle infotainment are not rich enough. The electronic device has a latest computing hardware platform, a latest software platform, a latest high-speed mobile data network connection capability, various user-preferred applications and services, and the like. Therefore, the in-vehicle infotainment of the vehicle is usually connected to the electronic device, to achieve hardware mutual assistance or application ecosystem sharing between the in-vehicle infotainment and the electronic device. For example, after the electronic device is connected to the in-vehicle infotainment in a wired or wireless manner, a user may control use of an application on the electronic device through an input/output device (for example, a large screen of the in-vehicle infotainment, a button knob, a microphone of the vehicle, a loudspeaker, or a camera) of the vehicle.

In a scenario in which the mobile phone is interconnected with the in-vehicle infotainment, how to improve interaction convenience while ensuring driving safety becomes a research focus in the industry.

### SUMMARY

To ensure driving safety and improve quick and convenient interaction in a scenario in which a mobile phone is interconnected with an in-vehicle infotainment, this application provides an interaction method, an electronic device, and a medium.

According to a first aspect, this application provides an interaction method, including: A first electronic device establishes a connection to a second electronic device, and the second electronic device displays a first interface, where the first interface includes first display content; the first electronic device detects a wake-up instruction of a voice assistant; the first electronic device sends first data corresponding to the wake-up instruction to the second electronic device, where the first data includes data corresponding to a voice wake-up state animation effect; and the second electronic device displays a second interface based on the first data and the first display content, where the second interface includes the first display content and second display content corresponding to the first data.

Based on the foregoing solution, when a user wakes up the voice assistant of the first electronic device, the first electronic device does not project a current display interface to the second electronic device for display, but sends only the data corresponding to the voice wake-up state animation effect to the second electronic device, and the second electronic device draws the data corresponding to the voice wake-up state animation effect. In this way, interaction between the user and the interface of the second electronic device is not interrupted, and user experience is improved.

In some embodiments, the first electronic device may be a mobile phone, and the second electronic device may be an in-vehicle infotainment. The first display content may be display content of a current display interface of the in-vehicle infotainment, and the second interface may be the voice wake-up state animation effect that is displayed on the current display interface of the in-vehicle infotainment.

In a possible implementation, the interaction method further includes: The second electronic device displays a third interface in response to an interaction operation between a user and the first electronic device, where the third interface includes the first display content and third display content corresponding to the interaction operation.

It may be understood that the interaction operation between the user and the first electronic device may mean that the user interacts with the voice assistant of the first electronic device by using a voice instruction, or the like. In some embodiments, the second electronic device may receive the voice instruction, and send data corresponding to the voice instruction to the first electronic device, the first electronic device performs processes such as ASR recognition and intent understanding on the voice instruction, and the first electronic device may send data corresponding to the third display content, namely, text data obtained through ASR recognition, intent understanding result data (a GUI for multi-round user selection), and voice interaction content data such as smart tips and voice interaction state animation effect data (such as a listening animation effect and a broadcast animation effect), to the in-vehicle infotainment to display.

In a process of interaction between the user and the first electronic device, the first electronic device may send only the voice interaction content and the voice interaction state animation effect, and does not send interface data corresponding to an application interface of the mobile phone. In this way, interaction between the user and the interface of the second electronic device is not interrupted, and user experience is improved.

In a possible implementation, the third display content includes voice interaction content and a voice interaction state animation effect that correspond to the interaction operation.

In a possible implementation, that the second electronic device displays a third interface in response to an interaction operation between a user and the first electronic device includes: The first electronic device sends data corresponding to the voice interaction content and data corresponding to the voice interaction state animation effect to the second electronic device in response to the interaction operation between the user and the first electronic device; and the second electronic device displays the third interface based on the data corresponding to the voice interaction content, the data corresponding to the voice interaction state animation effect, and the first display content.

In a possible implementation, the voice interaction content includes a text corresponding to a voice instruction of the user, smart tips, and intent understanding content; and the voice interaction state animation effect includes a listening animation effect or a broadcast animation effect.

In a possible implementation, the first electronic device detects an intent instruction of the user, and determines an execution device of the intent instruction based on a type of the intent instruction, a current running status of the first electronic device, and a current running status of the second electronic device; and when determining that the execution device of the intent instruction is the second electronic device, the first electronic device sends the intent instruction to the second electronic device.

It may be understood that, when detecting the intent instruction of the user, the first electronic device determines, based on the type of the intent instruction, the current running status of the first electronic device, and the current running status of the second electronic device, the execution device of the intent instruction. In this way, when the intent instruction is an intent that cannot be executed by the first electronic device, the second electronic device executes the intent instruction, to ensure execution of the intent instruction. In addition, a device that is currently most suitable for executing the intent instruction of the user may be determined as the execution device of the intent instruction based on the current running status of the first electronic device and the current running status of the second electronic device, so that user experience is improved. The current running status of the first electronic device and the current running status of the second electronic device may be an application that is currently running on the first electronic device and the second electronic device, and are used to determine whether an application that can execute an intent instruction and that is in the running status exists on the first electronic device and the second electronic device.

In a possible implementation, the second electronic device obtains an intent parameter and a slot parameter based on the intent instruction, and executes the intent instruction based on the intent parameter and the slot parameter.

It may be understood that, in this embodiment of this application, the second electronic device executes the intent instruction based on the slot parameter, so that the intent instruction of the user can be accurately executed. For example, functions of an application can be precisely controlled.

In a possible implementation, the determining an execution device of the intent instruction based on a type of the intent instruction, a current running status of the first electronic device, and a current running status of the second electronic device includes: when the type of the intent instruction is an exclusive type, determining that the execution device of the intent instruction is an execution device corresponding to the exclusive type; or when the intent instruction is not of an exclusive type, determining the execution device of the intent instruction based on the current running status of the first electronic device and the current running status of the second electronic device.

In a possible implementation, the determining the execution device of the intent instruction based on the current running status of the first electronic device and the current running status of the second electronic device includes: using a device that is running a first application or displays an interface of the first application and that is in the first electronic device and the second electronic device as the execution device of the intent instruction, where the first application is an application capable of executing the intent instruction.

It may be understood that a device that is running the application capable of executing the intent instruction or that displays an interface of the application capable of executing the intent instruction is used as the execution device of the intent instruction, so that a corresponding application of another device does not need to be restarted, and device resources are saved.

In a possible implementation, when the execution device of the intent instruction is the first electronic device, and the type of the intent instruction is a preset type for which an execution process does not need to be projected for display, the first electronic device skips sending, to the second electronic device, data corresponding to a display interface in the execution process of the intent instruction.

In some embodiments, the preset type of the execution process that does not need to be projected to display may be a type that does not require image viewing, like a music playing type. In this way, unnecessary interface data transmission and related interface drawing can be effectively avoided, and device resources can be saved.

In a possible implementation, when the execution device of the intent instruction is the first electronic device, and the type of the intent instruction is a preset type for which an execution process needs to be projected for display, the first electronic device sends, to the second electronic device, the first data corresponding to a display interface in the execution process of the intent instruction; and the first electronic device sends a fourth interface based on the first data corresponding to the display interface.

In a possible implementation, the fourth interface includes the first display content and fourth display content corresponding to the first data.

In a possible implementation, the first display content and the fourth display content are displayed in different areas of a screen of the first electronic device.

It may be understood that the second electronic device may display the first display content and the fourth display content on split screens.

In a possible implementation, the fourth interface includes fourth display content corresponding to the first data.

It may be understood that the second electronic device may display the first display content in full screen.

In a possible implementation, the first data does not include interface data corresponding to a current application interface of the first electronic device.

In a possible implementation, the first electronic device is a mobile phone, and the second electronic device is an in-vehicle infotainment.

In some embodiments, the in-vehicle infotainment may include a host CPU of the in-vehicle infotainment. In other words, the in-vehicle infotainment is a control system that can perform the interaction method in this application. In some other embodiments, the in-vehicle infotainment may alternatively be a combined structure including a host CPU of the in-vehicle infotainment and components such as a microphone, a loudspeaker, a voice button on a steering wheel, a central control large screen, a USB, a Bluetooth physical component, a Wi-Fi physical component, and a network antenna physical component.

In some embodiments, the mobile phone may include: a memory, configured to store a computer program, where the computer program includes program instructions; and a processor, configured to execute the program instructions, so that the mobile phone performs the interaction method mentioned in this application. The in-vehicle infotainment may include: a memory, configured to store a computer program, where the computer program includes program instructions; and a processor, configured to execute the program instructions, so that the mobile phone performs the interaction method mentioned in this application.

According to a second aspect, this application provides an electronic device. The electronic device is a first electronic device, and the first electronic device establishes a connection to a second electronic device. The first electronic device is configured to detect a wake-up instruction of a voice assistant. The first electronic device is configured to send first data corresponding to the wake-up instruction to the second electronic device, where the first data includes data corresponding to a voice wake-up state animation effect, and does not include interface data corresponding to a current application interface of the first electronic device.

In a possible implementation, the first electronic device is configured to: in response to an interaction operation between a user and the voice assistant, send data corresponding to voice interaction content and data corresponding to the voice interaction state animation effect to the second electronic device.

In a possible implementation, the first electronic device is configured to: detect an intent instruction of the user, and determine an execution device of the intent instruction based on a type of the intent instruction, a current running status of the first electronic device, and a current running status of the second electronic device; and when determining that the execution device of the intent instruction is the second electronic device, send the intent instruction to the second electronic device.

According to a third aspect, this application provides an electronic device. The electronic device is a second electronic device, and the second electronic device establishes a connection to a first electronic device. The second electronic device is configured to display a first interface, where the first interface includes first display content. The second electronic device is configured to display a second interface based on first data and first display content that are sent by the first electronic device, where the second interface includes the first display content and second display content corresponding to the first data, and the first data includes data corresponding to a voice wake-up state animation effect, and does not include data corresponding to a current application interface of the first electronic device.

In a possible implementation, the second electronic device is configured to display a third interface in response to an interaction operation between a user and a voice assistant of the first electronic device, where the third interface includes the first display content and third display content corresponding to the interaction operation.

According to a fourth aspect, this application provides an electronic device. The electronic device is a first electronic device, and the first electronic device establishes a connection to a second electronic device. The first electronic device includes: a voice assistant application, used to: detect a wake-up instruction of a voice assistant, and send first data corresponding to the wake-up instruction to a first voice assistant atomic service module of the first electronic device, where the first data includes data corresponding to a voice wake-up state animation effect, and does not include data corresponding to a current application interface of the first electronic device; and the first voice assistant atomic service module configured to send the data corresponding to the voice wake-up state animation effect to a second voice assistant atomic service module of the second electronic device.

In a possible implementation, the voice assistant application is used to: in response to an interaction operation between a user and the voice assistant, send data corresponding to voice interaction content and the data corresponding to the voice interaction state animation effect to the first voice assistant atomic service module. The first voice assistant atomic service module is configured to send the data corresponding to the voice interaction content and the data corresponding to the voice interaction state animation effect to the second voice assistant atomic service module of the second electronic device.

In a possible implementation, the second electronic device further includes a first voice intent collaborative distribution module. The voice assistant application is used to: detect an intent instruction of the user, and determine an execution device of the intent instruction based on a type of the intent instruction, a current running status of the first electronic device, and a current running status of the second electronic device. When it is determined that the execution device of the intent instruction is the second electronic device, the intent instruction is sent to the first voice intent collaborative distribution module. The first voice intent collaborative distribution module sends the intent instruction to a voice intent collaborative distribution module of the second electronic device.

According to a fifth aspect, this application provides an electronic device. The electronic device is a second electronic device, and the second electronic device establishes a connection to the second electronic device. The second electronic device includes a voice assistant distributed collaboration UI module, configured to control a screen of the second electronic device to display a first interface, where the first interface includes first display content. The voice assistant distributed collaboration UI module is configured to display a second interface based on first data sent by the first electronic device and the first display content, where the second interface includes the first display content and second display content corresponding to the first data, and the first data includes data corresponding to a voice wake-up state animation effect, and does not include data corresponding to a current application interface of the first electronic device.

In a possible implementation, the voice assistant distributed collaboration UI module is configured to: in response to an interaction operation between a user and a voice assistant of the first electronic device, control a screen of the second electronic device to display a third interface, where the third interface includes the first display content and third display content corresponding to the interaction operation.

According to a sixth aspect, this application provides an electronic device, including: a memory, configured to store a computer program, where the computer program includes program instructions; and a processor, configured to execute the program instructions, so that the electronic device performs the interaction method mentioned in this application.

According to a seventh aspect, this application provides a computer-readable storage medium. The computer-readable storage medium stores a computer program, the computer program includes program instructions, and the program instructions are run by an electronic device to enable the electronic device to perform the interaction method mentioned in this application.

### BRIEF DESCRIPTION OF DRAWINGS

FIG. 1a is a diagram showing a hardware structure of an electronic device according to some embodiments of this application;
FIG. 1b is a diagram showing a software structure of an electronic device according to some embodiments of this application;
FIG. 1c is a diagram showing structures of a vehicle and a mobile phone according to some embodiments of this application;
FIG. 1d is a diagram showing structures of a vehicle and a mobile phone according to some embodiments of this application;
FIG. 2 is a diagram showing a process of interaction between an in-vehicle infotainment and a mobile phone according to some embodiments of this application;
FIG. 3a is a diagram showing a scenario of projection of a driving mode home screen of a mobile phone according to some embodiments of this application;
FIG. 3b is a diagram showing a scenario of projection of a driving mode home screen of a mobile phone according to some embodiments of this application;
FIG. 4 shows a manner of interaction between a mobile phone and an in-vehicle infotainment according to some embodiments of this application;
FIG. 5 is a diagram showing a process of interaction between an in-vehicle infotainment and a mobile phone according to some embodiments of this application;
FIG. 6 is a schematic flowchart showing an interaction method according to some embodiments of this application;
FIG. 7 is a diagram showing a scenario of an interaction process according to some embodiments of this application;
FIG. 8 is a diagram showing a scenario of an interaction process according to some embodiments of this application;
FIG. 9a is a diagram showing data transmission and a reverse control process of an in-vehicle infotainment in a voice interaction process according to some embodiments of this application;
FIG. 9b is a diagram showing an intent collaborative distribution process according to some embodiments of this application;
FIG. 9c-1 to FIG. 9c-3 are a schematic flowchart showing an interaction method according to some embodiments of this application;

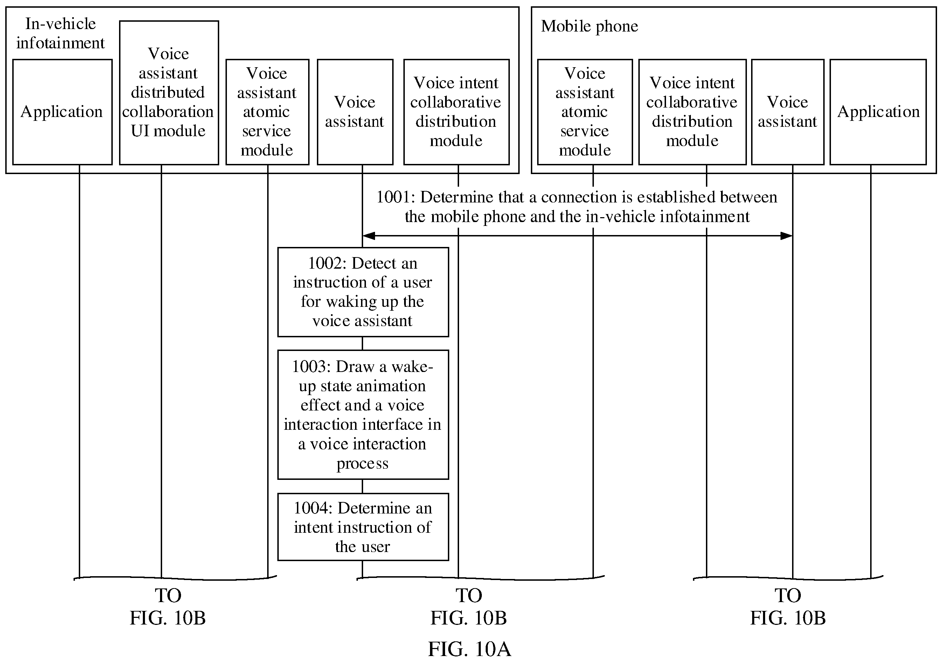

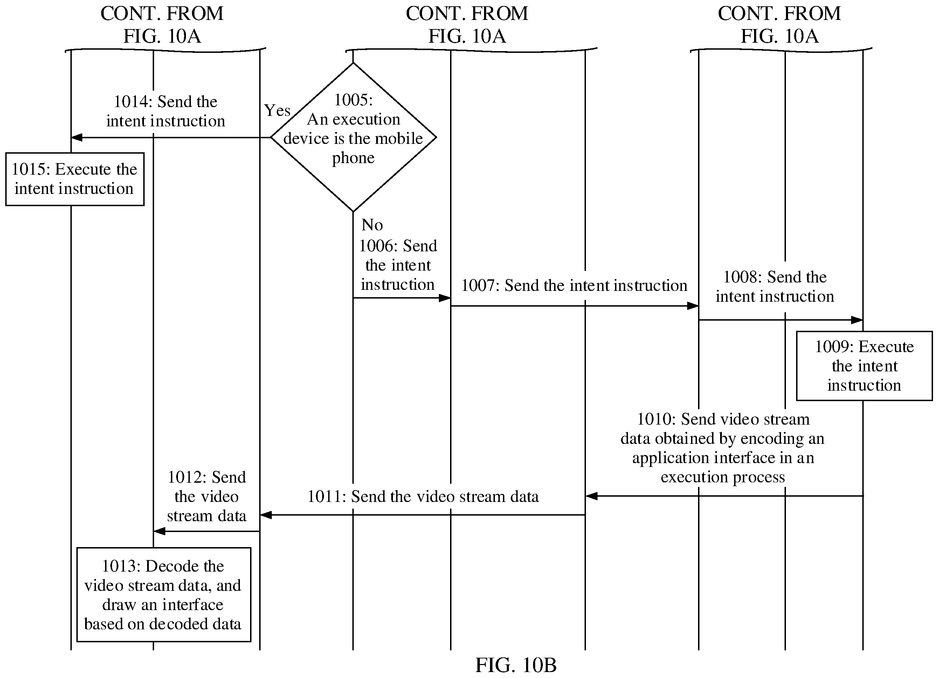

FIG. 10A and FIG. 10B are a schematic flowchart showing an interaction method according to some embodiments of this application;

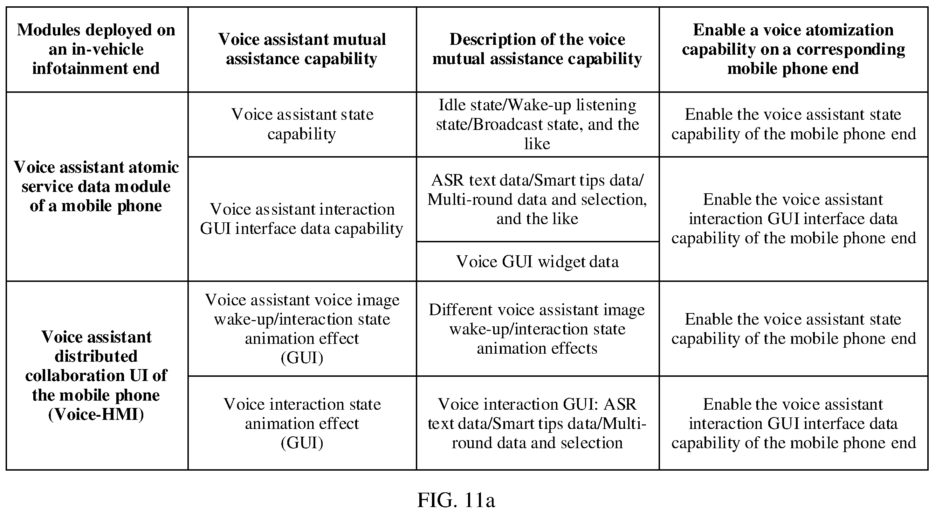

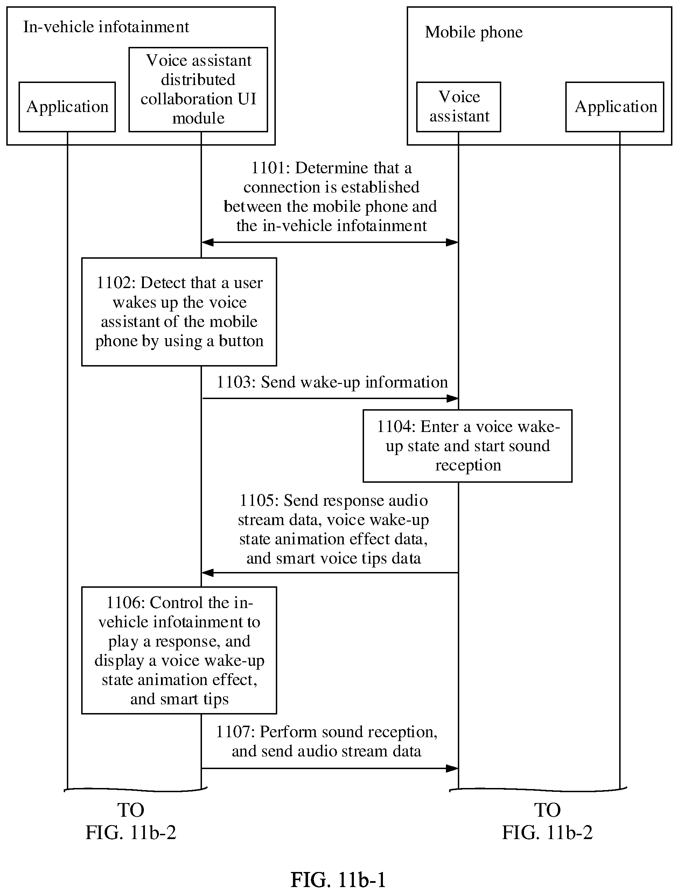

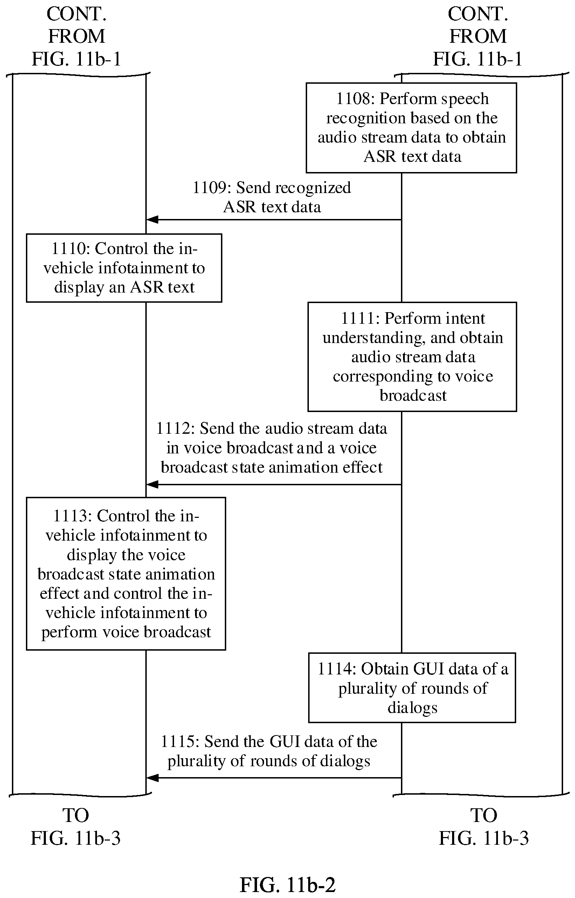

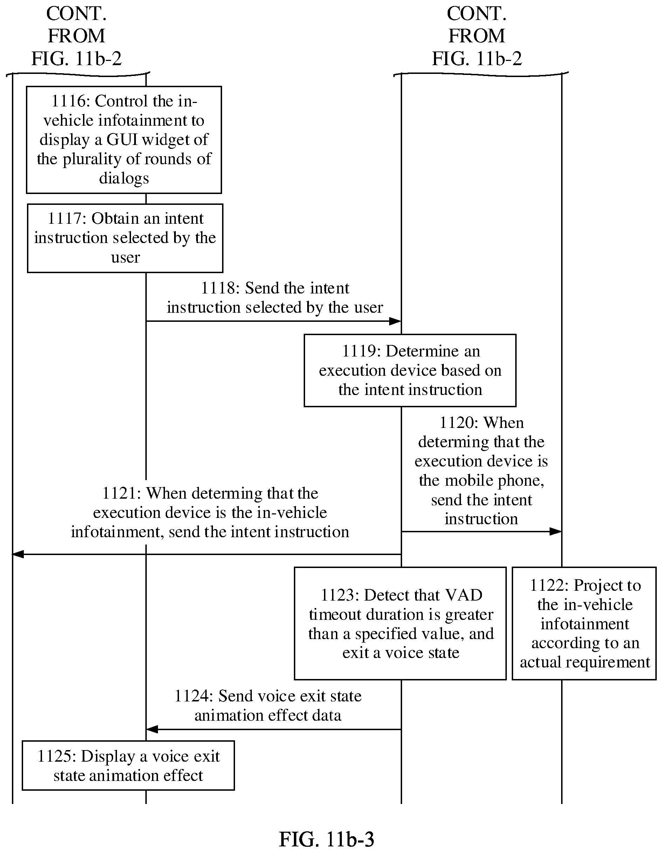

FIG. 11a is a diagram showing a deployment solution for implementing a voice mutual assistance capability according to some embodiments of this application; and
FIG. 11b-1 to FIG. 11b-3 are a schematic flowchart showing an interaction method according to some embodiments of this application.

### DESCRIPTION OF EMBODIMENTS

Illustrative embodiments of this application include but are not limited to an interaction method, an electronic device, and a medium.

Before the interaction method in this application is described in detail below, the electronic device mentioned in this application is first described. The electronic device may be a first electronic device mentioned in this application, or may be a second electronic device mentioned in this application. The first electronic device and the second electronic device may include but are not limited to a communication module that can perform the interaction method in this application, or a mobile phone, a personal computer, a tablet computer, a wearable device (for example, a smartwatch or a smart band), an in-vehicle infotainment, or the like that includes the communication module.

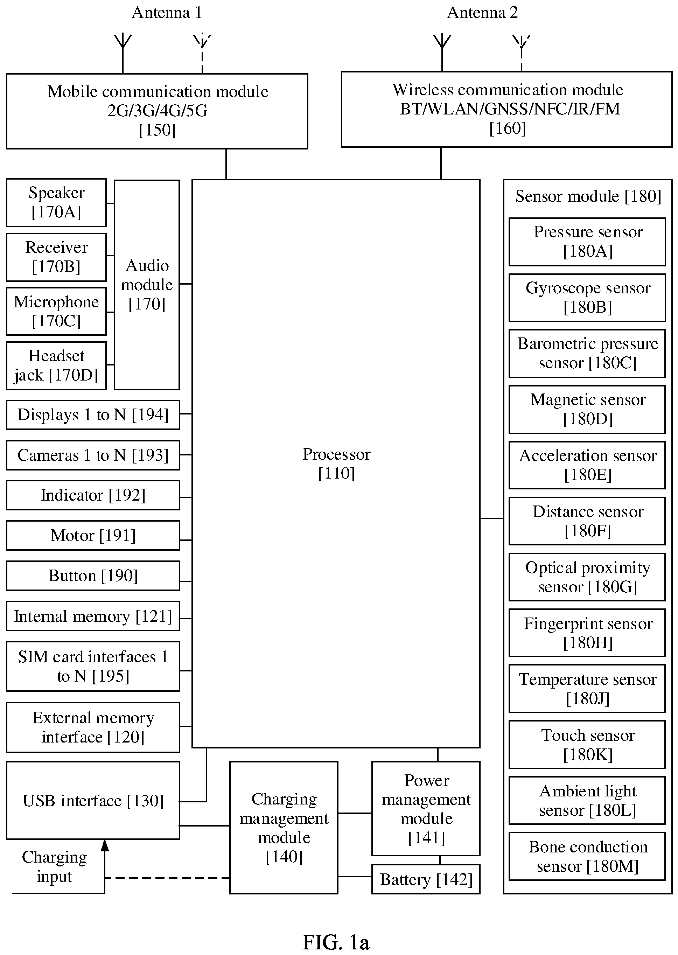

As shown in FIG. 1a, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the processor 110 may be configured to run an operating system of the electronic device to perform the steps on the electronic device side in the interaction method in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device, or may be used for data transmission between the electronic device and a peripheral device, or may be configured to connect to a headset for playing an audio through the headset. The interface may be further configured to connect to another electronic device like an AR device.

It may be understood that an interface connection relationship between the modules illustrated in embodiments of the present invention is merely an example for description, and does not constitute any limitation on a structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some wireless charging embodiments, the charging management module 140 may receive a wireless charging input through a wireless charging coil of the electronic device. The charging management module 140 further supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the antenna 2, the mobile communication module 150, the wireless communication module 160, a modem processor, a baseband processor, and the like.

The antenna 1 and the antenna 2 are configured to: transmit and receive an electromagnetic wave signal. Each antenna of the electronic device may be configured to cover one or more communication frequency bands. Different antennas may further be reused, to improve antenna utilization. For example, the antenna 1 may be reused as a diversity antenna of a wireless local area network. In some other embodiments, the antenna may be used in combination with a tuning switch.

The mobile communication module 150 may provide a solution to wireless communication such as 2G/3G/4G/5G applicable to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to an application processor. The application processor outputs a sound signal by an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution to wireless communication applicable to the electronic device, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device by using a wireless communication technology.

The electronic device implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194, which may also be referred to as a screen, is configured to display an image, a video, and the like. In some embodiments, the electronic device may include one or N displays 194, where N is a positive integer greater than 1.

The electronic device may implement a photographing function through an ISP, the camera 193, a video codec, the GPU, the display 194, the application processor, and the like.

The ISP is configured to process data fed back by the camera 193. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video.

The digital signal processor is configured to process a digital signal, and may process another digital signal in addition to the digital image signal. For example, when the electronic device selects a frequency, the digital signal processor is configured to perform Fourier transform and the like on frequency energy.

The video codec is configured to compress or decompress a digital video. The electronic device may support one or more types of video codecs. Therefore, the electronic device may play or record videos in a plurality of coding formats, for example, moving picture experts group (moving picture experts group, MPEG)-1, MPEG-2, MPEG-3, and MPEG-4.

An NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device, for example, image recognition, facial recognition, speech recognition, and text understanding, may be implemented through the NPU.

The external memory interface 120 may be configured to connect to an external memory card, like a micro SD card, to extend a storage capability of the electronic device. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area.

The electronic device may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device may listen to music or answer a hands-free call through the speaker 170A.

The receiver 170B, also referred to as an "earpiece", is configured to convert an audio electrical signal into a sound signal. When a call is answered or voice information is received by using the electronic device, the receiver 170B may be put close to a human ear to receive a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device. In some other embodiments, two microphones 170C may be disposed in the electronic device, to collect a sound signal and further implement a noise reduction function. In some other embodiments, three, four, or more microphones 170C may alternatively be disposed in the electronic device, to collect a sound signal, implement noise reduction, identify a sound source, implement a directional recording function, and the like.

The button 190 includes a power button, a volume button, and the like. The button 190 may be a mechanical button, or may be a touch button. The electronic device may receive a button input, and generate a key signal input related to user setting and function control of the electronic device.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

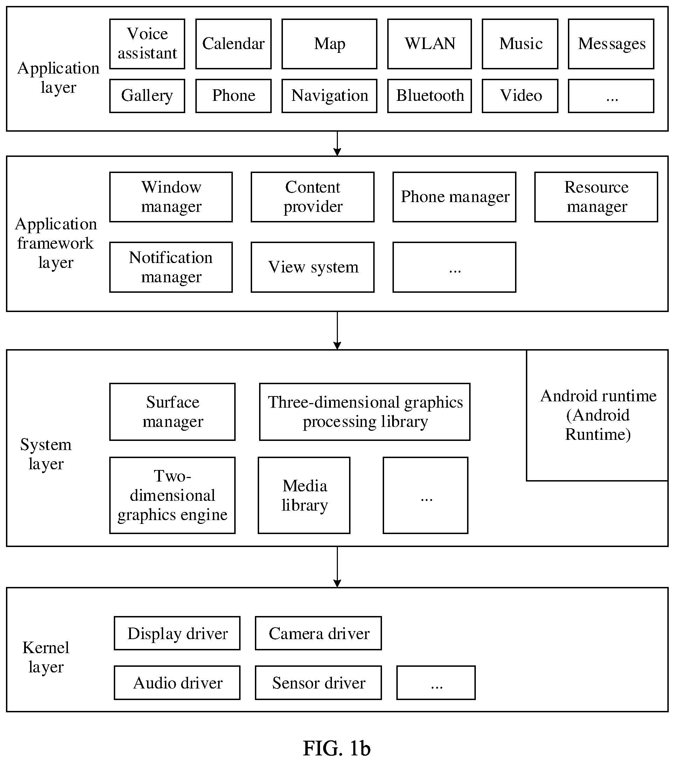

In some embodiments, a software system of the electronic device may use a layered architecture, an event-driven architecture, a microkernel architecture, a micro service architecture, or a cloud architecture. In embodiments of this application, an Android system of a layered architecture is used as an example to describe a software structure of a mobile phone. As shown in FIG. 1b, in a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. The application packages may include applications such as Voice assistant, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

The application framework layer may include a window manager, a content provider, a view system, a phone manager, a resource manager, a notification manager, and the like. In some embodiments, a voice wake-up module, a voice assistant atomic service module, and a voice intent collaborative distribution module may be disposed in an operating system according to an actual requirement, for example, may be disposed at the application framework layer.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS notification icon may include a text display view and an image display view.

The phone manager is configured to provide a communication function of the mobile phone, for example, management of a call status (including answering, hang-up, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on a screen in a form of dialog window. For example, text information is displayed in the status bar, an alert tone is made, the electronic device vibrates, or an indicator blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playing and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

It may be understood that the structure shown in embodiments of this application does not constitute a specific limitation on the electronic device. In some other embodiments of this application, a first electronic device or a second electronic device may include more or fewer components than those shown in the figure, or combine some components, or split some components, or have different component arrangements. The components shown in the figure may be implemented by hardware, software, or a combination of software and hardware.

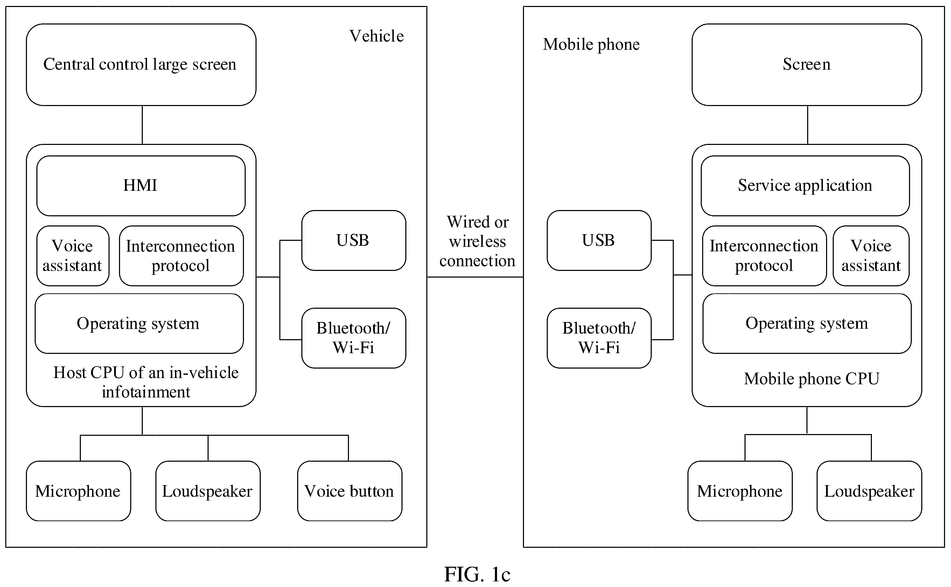

For example, in some embodiments, the first electronic device is a mobile phone. As shown in FIG. 1c, the mobile phone may include a CPU, a microphone, a loudspeaker, a USB interface, a Bluetooth physical component, a Wi-Fi physical component, a network antenna physical component, a screen, and the like.

The CPU is configured to run an operating system of the mobile phone to perform the interaction method in this application. For example, the CPU may run a voice assistant application, an interconnection protocol, and a related service application (for example, a music application and a navigation application) in the operating system. An architecture of the operating system of the mobile phone is described in detail below, and details are not described herein again.

The USB interface may be configured to implement a wired connection, for example, a connection using a connection line, between the mobile phone and an electronic device like an in-vehicle infotainment of a vehicle. The USB interface is an interface that conforms to a USB standard specification, and may be specifically a mini USB interface, a micro USB interface, a USB type-C interface, or the like. The USB interface may be configured to connect to a charger to charge the mobile phone, or may be configured to transmit data between the mobile phone and a peripheral device, or may be configured to connect to a headset for playing an audio through the headset.

The Bluetooth physical component is configured to implement Bluetooth short-range communication (usually at a distance within 10 m) between the mobile phone and another electronic device like an in-vehicle infotainment of a vehicle.

The Wi-Fi physical component is configured to implement Wi-Fi communication between the mobile phone and another electronic device like an in-vehicle infotainment of a vehicle.

The network antenna physical component may include a first antenna and a second antenna, and is configured to: transmit and receive an electromagnetic wave signal. The first antenna and the second antenna may be configured to cover one or more communication frequency bands. Different antennas may further be reused, to improve antenna utilization. For example, the first antenna may be reused as a diversity antenna of a wireless local area network. In some other embodiments, the first antenna and the second antenna may be used in combination with a tuning switch.

The screen is configured to display a human machine interaction interface, an image, a video, and the like. The screen includes a display panel.

The microphone and the loudspeaker may be used for voice interaction. Specifically, the loudspeaker, also referred to as a "speaker", is configured to convert an audio electrical signal into a sound signal. The mobile phone may play a voice through the loudspeaker, and may receive a user voice through the microphone.

It may be understood that a structure shown in embodiments of this application does not constitute a specific limitation on the mobile phone. In some other embodiments of this application, the mobile phone may include more or fewer components than those shown in the figure, or combine some components, or split some components, or have different component arrangements. The components shown in the figure may be implemented by hardware, software, or a combination of software and hardware.

In some embodiments, the second electronic device may be an in-vehicle infotainment. The following describes a partial structure of a vehicle including the in-vehicle infotainment. As shown in FIG. 1c, the vehicle may include a microphone, a loudspeaker, a voice button on a steering wheel, an in-vehicle infotainment, a central control large screen, a USB, a Bluetooth physical component, a Wi-Fi physical component, and a network antenna physical component.

The in-vehicle infotainment may include a host CPU of the in-vehicle infotainment. The host CPU of the in-vehicle infotainment may include one or more processing units. Different processing units may be independent components, or may be integrated into one or more processors. A storage unit may be disposed in the processor, and is configured to store instructions and data. The host CPU of the in-vehicle infotainment may be configured to run an operating system of the in-vehicle infotainment to perform the interaction method in this application, for example, a voice assistant application, an interconnection protocol, and a related service application (for example, a music application and a navigation application) in the operating system, and is further configured to control the central control large screen to display an HMI interface. An architecture of the operating system of the in-vehicle infotainment is described in detail below, and details are not described herein again.

The USB interface may be configured to implement a physical connection, for example, a connection using a connection line, between the mobile phone and an electronic device like the in-vehicle infotainment of the vehicle. The USB interface is an interface that conforms to a USB standard specification, and may be specifically a mini USB interface, a micro USB interface, a USB type-C interface, or the like. The USB interface may be configured to connect to a charger to charge the mobile phone, or may be configured to transmit data between the mobile phone and a peripheral device, or may be configured to connect to a headset for playing an audio through the headset.

The Bluetooth physical component is configured to implement Bluetooth short-range communication (usually at a distance within 10 m) between the mobile phone and another electronic device like an in-vehicle infotainment of a vehicle.

The Wi-Fi physical component is configured to implement Wi-Fi communication between the mobile phone and another electronic device like an in-vehicle infotainment of a vehicle.

The network antenna physical component may include a first antenna and a second antenna, and is configured to: transmit and receive an electromagnetic wave signal. The first antenna and the second antenna may be configured to cover one or more communication frequency bands. Different antennas may further be reused, to improve antenna utilization. For example, the first antenna may be reused as a diversity antenna of a wireless local area network. In some other embodiments, the first antenna and the second antenna may be used in combination with a tuning switch.

The central control large screen is configured to display an HMI, and the central control large screen includes a display panel.

The microphone and the loudspeaker may be used for voice interaction. Specifically, the loudspeaker, also referred to as a "speaker", is configured to convert an audio electrical signal into a sound signal. The mobile phone may play a voice through the loudspeaker, and may receive a user voice through the microphone.

The voice button on the steering wheel is configured to wake up a voice assistant.

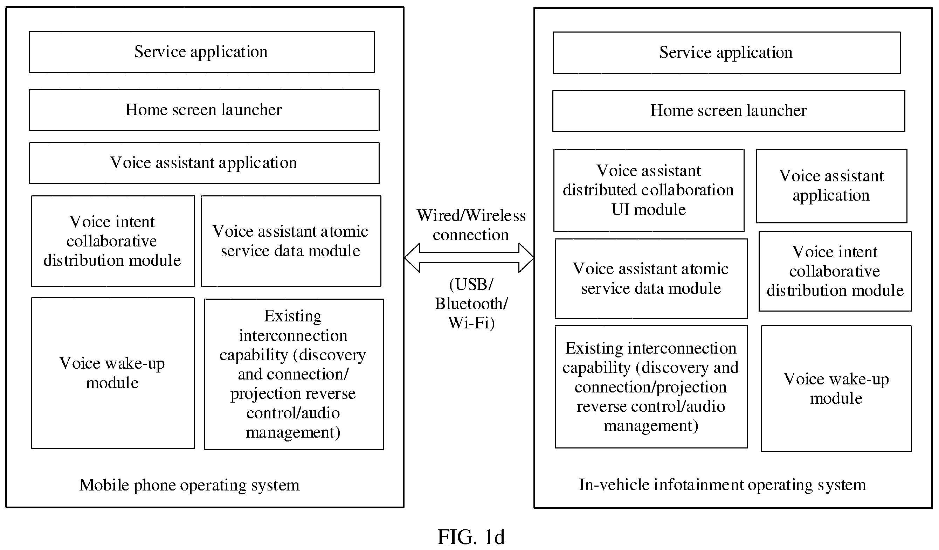

In some embodiments, the in-vehicle infotainment may include a host CPU of the in-vehicle infotainment. In other words, the in-vehicle infotainment is a control system that can perform the interaction method in this application. In some other embodiments, the in-vehicle infotainment may alternatively be a combined structure including a host CPU of the in-vehicle infotainment and components such as a microphone, a loudspeaker, a voice button on a steering wheel, a central control large screen, a USB, a Bluetooth physical component, a Wi-Fi physical component, and a network antenna physical component. Alternatively, the in-vehicle infotainment may include more or fewer components than those shown in FIG. 1 and the foregoing mentioned components, or combine some components, or split some components, or have different component arrangements, or have component arrangements having similar functions. The components shown in the figure may be implemented by hardware, software, or a combination of software and hardware.

In some embodiments, as shown in FIG. 1d, the operating system of the mobile phone may include:
a voice assistant application configured to: recognize a voice instruction of a user, perform intent understanding on the voice instruction of the user, determine an execution device of an intent instruction of the user, perform a voice response, and the like;
a voice wake-up module configured to: listen to a voice wake-up instruction of the user, and draw a wake-up state animation effect corresponding to a voice assistant of the mobile phone;
a voice assistant atomic service module configured to send voice interaction state data and interface data to an in-vehicle infotainment end;
a voice intent collaborative distribution module configured to: determine the execution device of the intent instruction of the user, send the intent instruction to the in-vehicle infotainment when determining that the execution device of the intent instruction of the user is the in-vehicle infotainment, and receive an intent instruction that is sent by the in-vehicle infotainment and that needs to be executed by the mobile phone; and
a service application configured to: execute a corresponding intent instruction, and send, to the voice assistant atomic service module of the mobile phone, video stream data obtained by encoding an application interface in an execution process.

The operating system of the in-vehicle infotainment may include:
a voice assistant application configured to: recognize a voice instruction of a user, perform intent understanding on the voice instruction of the user, determine an execution device of an intent instruction of the user, perform a voice response, and the like;
a voice wake-up module configured to: listen to a voice wake-up instruction of the user, and draw a wake-up state animation effect corresponding to a voice assistant of the in-vehicle infotainment;
a voice assistant distributed collaboration UI module configured to draw a corresponding interface on a display interface of the in-vehicle infotainment based on received voice interaction state data and interface data;
a voice assistant atomic service data module configured to: receive the voice interaction state data and the interface data that are sent by the mobile phone connected to the in-vehicle infotainment, and send the received voice interaction state data and interface data to the distributed collaboration UI module;
a voice intent collaborative distribution module configured to: determine the execution device of the intent instruction of the user, send the intent instruction to the mobile phone when determining that the execution device of the intent instruction of the user is the mobile phone, and receive an intent instruction that is sent by the mobile phone and that needs to be executed by the in-vehicle infotainment; and
a service application used to execute the corresponding intent instruction.

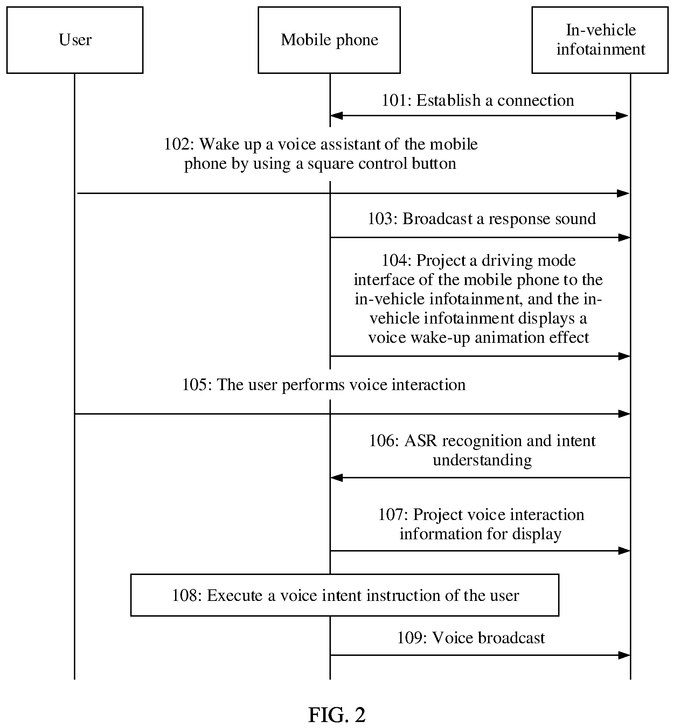

The following uses an interaction process between a mobile phone and an in-vehicle infotainment as an example to describe an interaction process between distributed devices in some embodiments. As shown in FIG. 2, the interaction process between the in-vehicle infotainment and the mobile phone may include the following steps.

101: The mobile phone establishes a connection to the in-vehicle infotainment.

It may be understood that a manner in which the mobile phone establishes the connection to the in-vehicle infotainment may be any implementable manner of connection between the mobile phone and the in-vehicle infotainment through Bluetooth, a wireless fidelity (wireless fidelity, Wi-Fi) network, a connection line, or the like.

102: A user wakes up a voice assistant of the mobile phone by using a square control button.

A manner in which the voice assistant is woken up may be any manner in which the user wakes up the voice assistant by using a voice wake-up word, a vehicle square control button, or the like.

103: The in-vehicle infotainment plays a response sound.

It may be understood that, in this embodiment of this application, the mobile phone sends response audio data to the in-vehicle infotainment, and the in-vehicle infotainment broadcasts the response sound based on the audio data.

104: The mobile phone projects a driving mode interface to the in-vehicle infotainment, and the in-vehicle infotainment displays a voice wake-up animation effect.

It may be understood that the driving mode interface (home screen) of the mobile phone is a current display interface of the mobile phone when the mobile phone is connected to the in-vehicle infotainment. In some embodiments, the driving mode home screen of the mobile phone may alternatively be a display interface obtained by removing some non-core data from the current display interface of the mobile phone, for example, a display interface obtained by removing some controls, icons, or the like from the current display interface.

105: The user performs voice interaction.

It may be understood that the user may send an intent instruction in a voice manner. For example, the user sends a voice instruction "Navigate to an address A", and the in-vehicle infotainment may receive the intent instruction of the user through a sound reception device like a microphone.

106: The mobile phone performs ASR recognition and intent understanding.

In some embodiments, the in-vehicle infotainment may send the intent instruction to the mobile phone. The mobile phone performs ASR recognition, intent understanding, and the like on the intent instruction, obtains voice interaction information, and projects a current interface that is of the mobile phone and that includes the voice interaction information to the in-vehicle infotainment.

107: The mobile phone projects the voice interaction information for display.

It may be understood that the in-vehicle infotainment may display a current interface of the mobile phone, and the voice interaction information may be displayed on the current interface of the mobile phone.

For example, the mobile phone displays a text corresponding to the intent instruction, and confirms the intent instruction. For example, when the user sends the voice instruction "Navigate to an address A", the mobile phone may display, on a current interface, a text corresponding to the voice instruction "Navigate to an address A", understand the voice instruction, and display a plurality of options "Navigate to an address A1", "Navigate to an address A2", "Navigate to an address A", and the like that are obtained through semantic understanding, to facilitate selection and confirmation of the user. All display interfaces in the interaction process between the mobile phone and the user may be projected to the in-vehicle infotainment for display.

108: The mobile phone executes the voice intent instruction of the user.

It may be understood that, after confirming the intent instruction of the user, the mobile phone may execute the intent instruction of the user. For example, when confirming that the user selects "Navigate to an address A", the mobile phone may start a navigation application for navigation.

109: The in-vehicle infotainment performs voice broadcast.

In some embodiments, the mobile phone may send voice broadcast data to the in-vehicle infotainment, and the in-vehicle infotainment performs voice broadcast.

It may be understood that, in the foregoing embodiment, after the mobile phone is connected to the in-vehicle infotainment, the mobile phone automatically enters a driving mode. After the voice assistant of the mobile phone is woken up, if the driving mode home screen of the mobile phone is not projected to a central control screen of the vehicle for display, the mobile phone directly applies for projecting the driving mode home screen of the mobile phone to a screen of the in-vehicle infotainment. As described above, the driving mode home screen of the mobile phone is a current display interface of the mobile phone when the mobile phone is connected to the in-vehicle infotainment, or a display interface obtained by removing some non-core data from a current display interface of the mobile phone. The driving mode home screen of the mobile phone may include an application shortcut entry navigation bar (for example, a voice wake-up bubble), state information, a service widget, an application window interface, and the like.

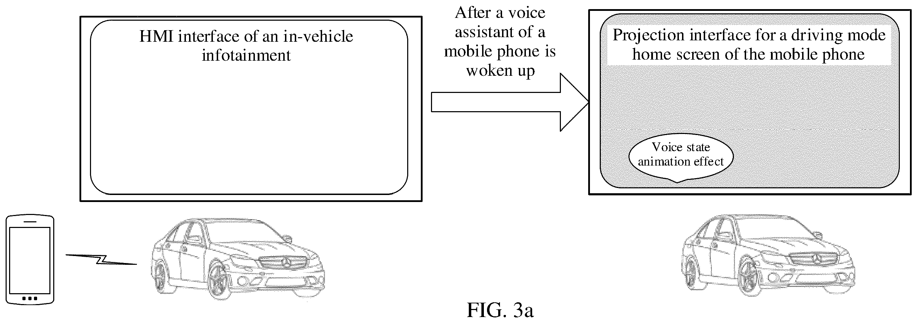

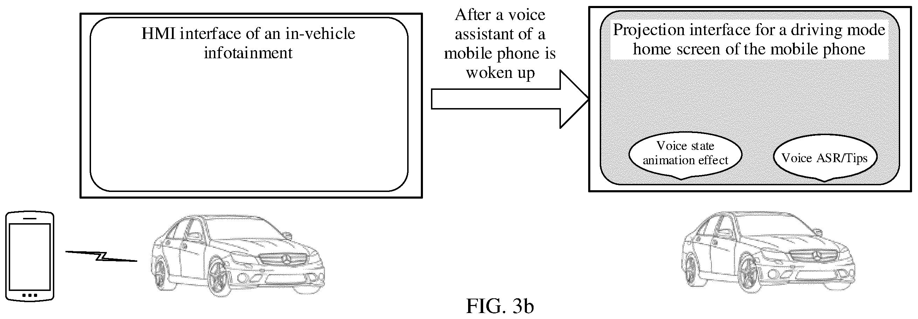

After the driving mode home screen of the mobile phone is projected to the in-vehicle infotainment, as shown in FIG. 3a, the screen of the in-vehicle infotainment directly displays the driving mode home screen of the mobile phone and a voice state animation effect. As shown in FIG. 3b, in a process in which the user interacts with the voice assistant by using a wake-up icon on a projection interface, the mobile phone projects a driving mode home screen interface to the screen of the in-vehicle infotainment, and the in-vehicle infotainment may display a voice state animation effect, and an ASR text or tips in the interaction process. In this way, a current human machine interface (Human Machine Interface, HMI) of the in-vehicle infotainment is covered by the driving mode home screen of the mobile phone, and interaction between the user and the HMI of the in-vehicle infotainment is interrupted. In this case, the user may only want to wake up a mobile phone assistant, and require the mobile phone assistant to execute some functions, for example, playing music, and the user does not need to view a current interface of the mobile phone, but wants to continue to interact with the HMI of the in-vehicle infotainment, for example, wants to continue to view a navigation interface on the screen of the in-vehicle infotainment. However, because an interface projected by the mobile phone has covered an application interface of the in-vehicle infotainment, user experience is poor, and in some cases, driving safety is also affected.

In addition, in some solutions for interconnection between the in-vehicle infotainment and the mobile phone, a projection manner in which an application interface of the mobile phone is projected is used. To be specific, a display interface of the in-vehicle infotainment only includes an application interface window projected by the mobile phone, and does not include another function interface of the driving mode home screen. In this way, because no voice interface is projected, a voice assistant collaboration function cannot be used on the in-vehicle infotainment end.

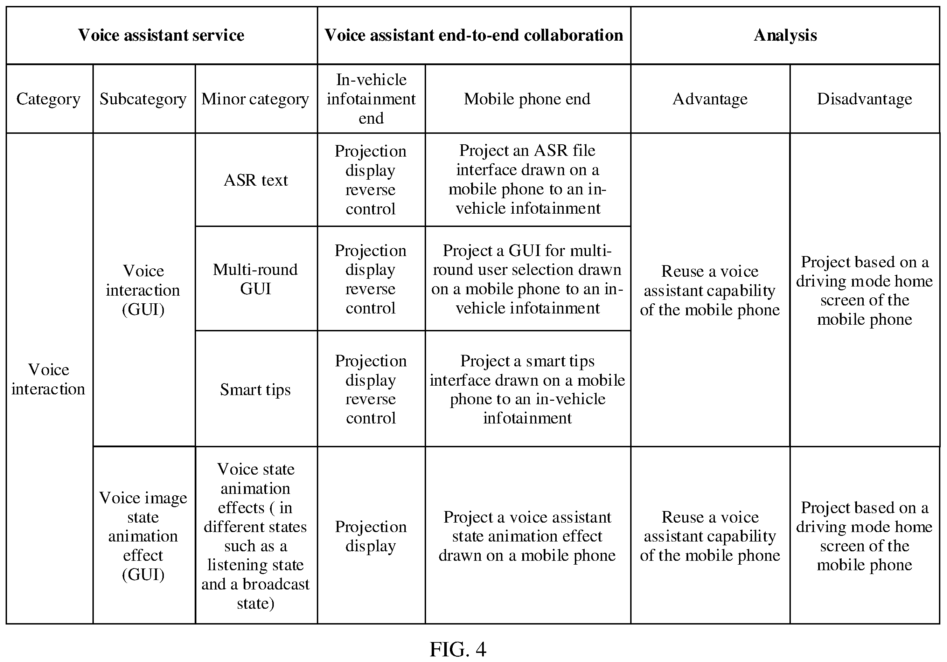

In addition, in some other solutions for interconnection between the in-vehicle infotainment and the mobile phone, after the voice assistant of the mobile phone is woken up, as shown in FIG. 4, a graphical user interface (Graphical User Interface, GUI) of a voice interaction process, for example, a voice interaction GUI (including user automatic speech recognition (Automatic Speech Recognition, ASR) text display, smart tips (tips), a GUI for multi-round user selection, and the like), and a voice image state animation effect GUI (including a voice wake-up (listening) state animation effect and a voice broadcast state animation effect), is projected, based on the current display interface of the mobile phone, to the screen of the in-vehicle infotainment for display after the GUI interface is drawn on the mobile phone. After detecting a screen touch operation of the user, the in-vehicle infotainment may send a corresponding screen touch event to a corresponding application of the mobile phone, to reversely control a corresponding application of the mobile phone. In the foregoing solution, the interface projected by the mobile phone also covers the HMI of the in-vehicle infotainment, and interaction between the user and the HMI of the in-vehicle infotainment is interrupted. This leads to poor user experience.

To resolve the foregoing problem, an embodiment of this application provides an interaction method, including: A first electronic device establishes a connection to a second electronic device; after a voice assistant of the first electronic device is woken up, the first electronic device sends voice assistant wake-up state animation effect data to the second electronic device, and does not send current display interface data of the first electronic device; and the second electronic device displays a voice assistant wake-up state animation effect based on the voice assistant wake-up state animation effect data. In a subsequent voice interaction process between a user and the first electronic device, the first electronic device sends only voice interaction data (namely, data corresponding to the voice interaction GUI and the voice image state animation effect GUI mentioned above) in the voice interaction process to the second electronic device, and does not send the current display interface of the first electronic device either. The second electronic device may draw the voice interaction GUI and the voice image state animation effect GUI on a current display interface of the second electronic device based on the voice interaction data. After receiving an intent instruction of the user, if determining that the user has a requirement for viewing a current application interface of the first electronic device in a process of executing the intent instruction of the user, the voice assistant of the first electronic device projects a corresponding application interface to the second electronic device for display.

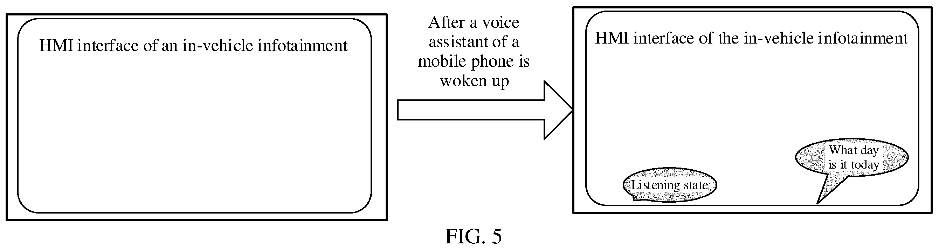

Based on the foregoing solution, when the user wakes up the voice assistant of the first electronic device, the first electronic device does not directly project a current display interface to the second electronic device for display, but sends only a voice wake-up state animation effect to the second electronic device, and the second electronic device draws the voice wake-up state animation effect. In this way, interaction between the user and the interface of the second electronic device is not interrupted, and user experience is improved. For example, as shown in FIG. 5, when the first electronic device is a mobile phone, and the second electronic device is an in-vehicle infotainment, if the user wakes up a voice assistant of the mobile phone by using a wake-up word "Celia", the mobile phone may send data corresponding to a wake-up state animation effect to the in-vehicle infotainment. Based on the data corresponding to the wake-up state animation effect, the in-vehicle infotainment displays the wake-up state animation effect and smart tips "What day is it today", and the like on the original HMI of the in-vehicle infotainment.

When the user performs voice interaction with the first electronic device, the first electronic device may send data corresponding to voice interaction content and data corresponding to a voice interaction state animation effect to the second electronic device, the second electronic device displays the voice interaction content and the voice interaction state animation effect on the current display interface of the second electronic device based on the data corresponding to the voice interaction content and the data corresponding to the voice interaction state animation effect. In some embodiments, the voice interaction content may include a text corresponding to a voice instruction of the user, smart tips, intent understanding content, and the like, and the voice interaction state animation effect may include a broadcast animation effect, a listening animation effect, and the like.

In some embodiments, an interaction operation between the user and the first electronic device may include an operation of sending a voice instruction by the user to the voice assistant of the first electronic device. For example, when the first electronic device is a mobile phone, and the second electronic device is an in-vehicle infotainment, in a process in which the user interacts with a voice assistant of the mobile phone, for example, when the user sends a voice instruction "Navigate to a railway station", the in-vehicle infotainment may receive the voice instruction of the user through a device like a microphone, and may send data corresponding to the received voice instruction of the user to the mobile phone. When receiving the data corresponding to the voice instruction of the user, the mobile phone obtains a recognition text corresponding to the voice instruction, the mobile phone may send a text "Navigate to a railway station" corresponding to the voice instruction to the in-vehicle infotainment, and the in-vehicle infotainment may display the text "Navigate to a railway station".

In some embodiments, when detecting the voice instruction of the user, the second electronic device may alternatively perform a voice instruction recognition process, for example, directly perform processes such as voice instruction recognition and intent understanding, to obtain a corresponding voice instruction text for display. When an intent is executed, the first electronic device may project, according to a user requirement, a corresponding application interface to the second electronic device for display. This facilitates viewing by the user and improves user experience. In addition, the voice interaction data includes the wake-up state animation effect data. In this way, the second electronic device may obtain an entry for waking up the voice assistant, so that the user may control use of an application of the first electronic device through the second electronic device, in other words, the second electronic device and the first electronic device may use a voice assistant collaboration function.

In addition, for example, in the foregoing solution in which the GUI in the voice interaction process and the voice image state animation effect GUI are projected, based on the current display interface of the first electronic device, to a screen of the second electronic device (for example, the in-vehicle infotainment) for display after the GUI interface is drawn on the first electronic device (for example, the mobile phone), when the voice assistant woken up by the user is the voice assistant of the second electronic device, a corresponding first electronic device application can be started only by using the voice assistant of the second electronic device, but a specific function of the first electronic device application cannot be controlled by using the voice assistant of the second electronic device. For example, a navigation application can be started only by using the voice assistant of the second electronic device, and a map application of the first electronic device cannot be controlled by using the voice assistant of the second electronic device to navigate to a destination address. For another example, a music playing application can be started only by using the voice assistant of the second electronic device, and a music application of the first electronic device cannot be controlled to play a song of a singer. In this way, an application that is shared by the first electronic device to the second electronic device through interconnection cannot be consistent with a native application of the second electronic device in voice interaction experience of the second electronic device.

To resolve the foregoing problem, in this embodiment of this application, after receiving the intent instruction of the user, the woken-up voice assistant may determine, based on a type of the intent of the user, whether an application that can execute the intent is currently in a running status, and the like, a device that executes the intent instruction of the user. For example, after the voice assistant of the first electronic device is woken up, when the intent instruction of the user is received, if it is determined that the first electronic device is an intent execution device, the first electronic device may execute the intent instruction of the user, and send corresponding application interface data in an execution process to the second electronic device, so that the second electronic device draws a corresponding application interface. When it is determined that the second electronic device is the intent execution device, the intent instruction may be sent to the second electronic device, and is executed by the second electronic device.

A manner of determining the intent execution device by a device that is woken up by the voice assistant may be as follows: first determining whether the type of the intent instruction is an exclusive type, where the exclusive type is an intent that may be executed only by the second electronic device or the first electronic device. When it is determined that the type of the intent instruction is the exclusive type, it is determined that a device corresponding to the exclusive type is the execution device. When it is determined that the type of the intent instruction is not the exclusive type, the execution device may be determined based on a current running status of the second electronic device and a current running status of the first electronic device. For example, it may be determined whether there is a device that is running an application that can execute a current intent instruction. If there is a device that is running an application that can execute a current intent instruction, it is determined that the device that is running the application that can execute the current intent instruction is the execution device.

For example, when the first electronic device is a mobile phone, and the second electronic device is an in-vehicle infotainment, if an intent instruction received by the mobile phone from the user is to turn on a vehicle air conditioner, and it is determined that the type of the user intent is a vehicle control type, that is, the user intent belongs to an exclusive type intent executed by the in-vehicle infotainment, it is determined that the device executing the user intent is the in-vehicle infotainment. When the received instruction of the user is "Navigate to an address A", it is determined that the user intent is of a navigation type, and the intent is not of the exclusive type. In this case, the mobile phone may determine whether a device is running the navigation application. For example, if the mobile phone is running the navigation application, and the in-vehicle infotainment does not run the navigation application, the mobile phone is used as the user intent execution device.

In addition, in some embodiments, the execution device may parse the intent instruction of the user to obtain an intent parameter and a slot parameter that correspond to the intent instruction, and invoke the intent parameter and the slot parameter that correspond to the intent instruction of the user to execute the intent instruction of the user. The intent parameter may be a feature parameter that represents a user intent type, for example, map navigation, air conditioner control, or music playing control. The slot parameter may be a specific detail feature parameter corresponding to the feature parameter of the user intent type. For example, a specific detail feature parameter corresponding to map navigation may be a navigation destination, a specific detail feature parameter corresponding to air conditioner control may be a specific temperature, and a specific detail feature parameter corresponding to music playing control may be a song name, an album name, a singer, a music label (for example, a language, a musical instrument, a style, an emotion, an age, a singer gender, or a ranking list), a playing application name, or the like.

For example, if the intent instruction of the user is "Navigate to an address A", an intent parameter corresponding to the intent instruction of the user may be "Map navigation", and a slot parameter may be a destination address: "Address A" that needs to be navigated to in the application.

For example, the intent instruction of the user is "Adjust a temperature of an air conditioner to 26°C". In this case, the intent parameter corresponding to the intent instruction of the user may be "Air conditioner control", and the slot parameter may be a temperature "26°C".

For example, if the intent instruction of the user is "Play music A of Mr. Liu by using Huawei Music", the corresponding intent parameter may be "Music playing control", and the slot parameter may be Music A, Mr. Liu, and Huawei Music.

It may be understood that, in this embodiment of this application, the execution device executes the intent instruction based on the intent parameter and the slot parameter, so that the intent instruction of the user can be accurately executed. In addition, a voice assistant of one device may be woken up to accurately control an in-application function of another device.

Based on the foregoing manner, a voice assistant of one device in distributed collaboration devices may be woken up to accurately control an application of another device, so that voice interaction experience of an application that is shared by the one device to the another device through interconnection is consistent with voice interaction experience of a native application of the another device on the another device. This improves user experience.

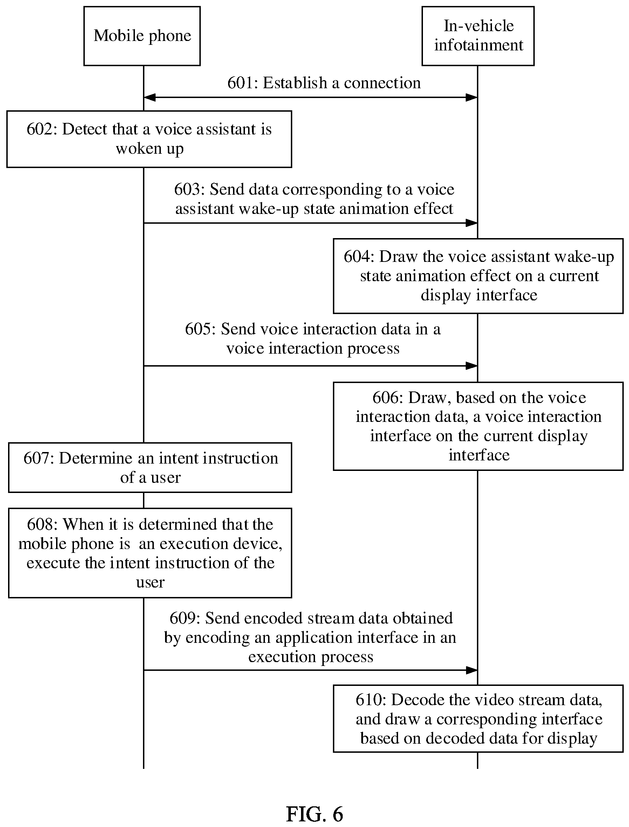

The following describes in detail the interaction method mentioned in embodiments of this application by using an example in which the first electronic device is a mobile phone, the second electronic device is an in-vehicle infotainment, and the user wakes up a voice assistant of the mobile phone. FIG. 6 is a diagram of an interaction method according to an embodiment of this application. As shown in FIG. 6, the interaction method may include the following steps.

601: A mobile phone establishes a connection to an in-vehicle infotainment.

It may be understood that a manner in which the mobile phone establishes the connection to the in-vehicle infotainment may be any implementable manner of connection between the mobile phone and the in-vehicle infotainment through Bluetooth, Wi-Fi, a USB, or the like.

602: The mobile phone detects an instruction of a user for waking up a voice assistant.

A manner in which the voice assistant of the mobile phone is woken up may be any implementable manner like a manner in which the user uses a square control button of a vehicle or a voice wake-up word corresponding to the mobile phone.

603: The mobile phone sends data corresponding to a voice assistant wake-up state animation effect to the in-vehicle infotainment.

In this embodiment of this application, when the user wakes up the voice assistant of the mobile phone, the mobile phone does not directly project a current display interface to the in-vehicle infotainment for display, but sends only voice wake-up state animation effect data or voice wake-up state animation effect data and smart tips data to the in-vehicle infotainment, and the in-vehicle infotainment draws a voice wake-up state animation effect or a voice wake-up state animation effect and smart tips on an original display interface. In this way, interaction between the user and an interface of the in-vehicle infotainment is not interrupted, and user experience is improved.

For example, when the user wakes up the voice assistant of the mobile phone by using a wake-up word "Celia", the mobile phone may send data corresponding to a wake-up state animation effect to the in-vehicle infotainment. As shown in FIG. 5, the in-vehicle infotainment displays, based on the data corresponding to the wake-up state animation effect, the wake-up state animation effect, smart tips "What day is it today", and the like in a wake-up listening state on an original HMI interface of the in-vehicle infotainment.

604: The in-vehicle infotainment draws the voice assistant wake-up state animation effect on the current display interface.

In some embodiments, the in-vehicle infotainment may display, based on the data corresponding to the voice assistant wake-up state animation effect, the voice assistant wake-up state animation effect on a current original interface of the in-vehicle infotainment. In some embodiments, in addition to displaying the voice assistant wake-up state animation effect, the in-vehicle infotainment may further display smart tips on the current original interface.

605: The mobile phone sends voice interaction data in a voice interaction process to the in-vehicle infotainment.

In some embodiments, the voice interaction data in the voice interaction process may be voice interaction content and a corresponding voice interaction state animation effect that are generated by the mobile phone in response to an interaction operation performed between the user and the voice assistant of the mobile phone. The interaction operation performed between the user and the voice assistant of the mobile phone may be an operation of sending a voice intent instruction to the voice assistant of the mobile phone by the user.

It may be understood that the in-vehicle infotainment may receive, through a device like a microphone, the voice intent instruction in a process in which the user performs voice interaction with the voice assistant of the mobile phone, and send data corresponding to the voice intent instruction to the mobile phone. The mobile phone performs processes such as ASR recognition and intent understanding, and the mobile phone may send voice interaction content data, namely, text data obtained through ASR recognition, intent understanding result data (a GUI for multi-round user selection), smart tips, and the like, and voice interaction state animation effect data (such as a listening animation effect and a broadcast animation effect) to the in-vehicle infotainment for display.

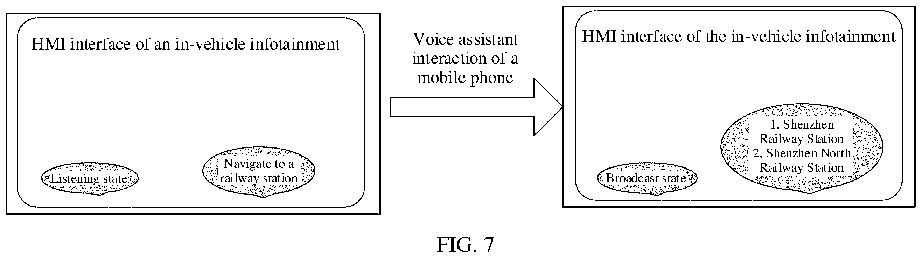

For example, after the voice assistant of the mobile phone is woken up, the in-vehicle infotainment displays an original interface and a wake-up state animation effect (or referred to as a listening state animation effect). When the user sends a voice intent instruction "Navigate to a railway station", the in-vehicle infotainment may send data corresponding to the voice intent instruction to the mobile phone. When receiving the voice intent instruction data from the user, the mobile phone performs ASR recognition on the voice intent instruction, to obtain a text corresponding to the voice intent instruction, and sends the text corresponding to the voice intent instruction to the in-vehicle infotainment. As shown in FIG. 7, the in-vehicle infotainment may display the original interface, the listening state animation effect, and the text "Navigate to a railway station".

In addition, the mobile phone may perform intent understanding on the voice intent instruction, to obtain an intent understanding result, for example, including a plurality of options "1. Shenzhen Railway Station" and "2. Shenzhen North Railway Station" obtained through the intent understanding, and send the intent understanding result and a corresponding broadcast state animation effect to the in-vehicle infotainment for display. As shown in FIG. 7, the in-vehicle infotainment may display the original interface of the in-vehicle infotainment, the plurality of options "1. Shenzhen Railway Station" and "2. Shenzhen North Railway Station" obtained through semantic understanding, and the broadcast state animation effect.

In this embodiment of this application, the mobile phone may send only the voice interaction data to the in-vehicle infotainment, and does not send current application interface data of the mobile phone to the in-vehicle infotainment, so that the in-vehicle infotainment may directly display, on the original interface (namely, the current display interface) of the in-vehicle infotainment, interaction content (namely, a voice interaction interface) drawn based on the voice interaction data. The original interface of the in-vehicle infotainment is not completely blocked, so that user experience is improved.

In some embodiments, the in-vehicle infotainment may receive, through a device like a microphone, a voice intent instruction in a process in which the user performs voice interaction with the voice assistant of the mobile phone, and directly perform processes such as ASR recognition and intent understanding. In addition, the in-vehicle infotainment may directly display, on the original interface, voice interaction content such as text data obtained through ASR recognition, intent understanding result data (a GUI for multi-round user selection), smart tips, and send voice interaction state animation effect data (such as a listening animation effect and a broadcast animation effect) for sending to the in-vehicle infotainment for display.

606: The in-vehicle infotainment draws, based on the voice interaction data, a voice interaction interface on the current display interface.

607: The mobile phone determines an intent instruction of the user.

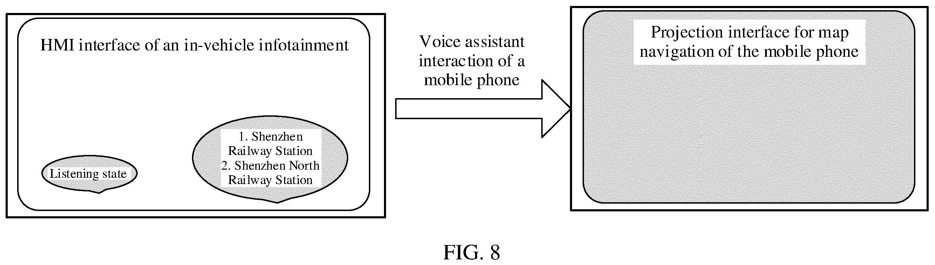

In some embodiments, as shown in FIG. 8, the user may select Shenzhen North Railway Station from options "1. Shenzhen Railway Station" and "2. Shenzhen North Railway Station" by sending the voice intent instruction to the voice assistant of the mobile phone. The in-vehicle infotainment may receive, through a device like a microphone, the voice intent instruction of the user, and send data corresponding to the voice intent instruction to the mobile phone. The mobile phone determines, based on the data corresponding to the voice intent instruction of the user, that the intent instruction of the user is to navigate to Shenzhen North Railway Station. In addition, an execution device is determined based on a manner of determining the execution device mentioned in the subsequent step 608. If it is determined that the mobile phone is the execution device, in a process in which the mobile phone executes the intent instruction, navigation interface data in the process in which the mobile phone executes the intent instruction is sent to the in-vehicle infotainment, and the in-vehicle infotainment may draw, based on the navigation interface data in the execution process of the mobile phone, a corresponding navigation interface for display]

In some embodiments, the in-vehicle infotainment may alternatively perform processes such as ASR recognition and intent understanding on the voice intent instruction sent by the user directly, to determine the intent instruction of the user, and directly display voice interaction content such as an ASR recognition text and an intent understanding result. For example, the in-vehicle infotainment may determine, based on the voice intent instruction of the user for selecting Shenzhen North Railway Station, that the intent instruction of the user is to navigate to Shenzhen North Railway Station.

In some embodiments, the navigation interface may be displayed by the in-vehicle infotainment in full screen. For example, a current interface of the in-vehicle infotainment is switched to the navigation interface.

In some embodiments, the navigation interface may alternatively be displayed by the in-vehicle infotainment in a floating manner. For example, a floating window of a navigation application is displayed in a pop-up window on a current interface of the in-vehicle infotainment, to display a corresponding navigation interface.

In some embodiments, the navigation interface may alternatively be displayed by the in-vehicle infotainment in a manner in which the navigation interface and another application interface are displayed on split screens. For example, the navigation interface and the another application interface are displayed in different display areas of a central control large screen of the in-vehicle infotainment.

It should be noted that, in this embodiment of this application, an application interface drawn by the in-vehicle infotainment based on application interface data in the execution process of the mobile phone may be displayed in any implementable display manner such as full-screen display, display in a floating window, or split-screen display.

608: When determining that the mobile phone is the execution device, the mobile phone executes the intent instruction of the user.

It may be understood that, in this embodiment of this application, after determining the intent instruction of the user, the voice assistant of the mobile phone may determine the execution device of the intent instruction. In some embodiments, a device that is woken up by the voice assistant may determine, based on a type of a user intent, a running status of the mobile phone, and a running status of the in-vehicle infotainment, for example, whether an application that can execute the intent and that is in a running status exists on the mobile phone and the in-vehicle infotainment, a device that executes the user intent.

In some embodiments, a woken-up device may first determine whether a type of the intent instruction is an exclusive type, where the exclusive type is an intent type that may be executed only by the in-vehicle infotainment or the mobile phone. A non-exclusive type is an intent type that may be executed by both the mobile phone and the in-vehicle infotainment. For example, a vehicle control intent, for example, vehicle air conditioner and light control, may be executed only by the in-vehicle infotainment. In this case, the vehicle control intent is an intent of an exclusive type corresponding to the in-vehicle infotainment. For example, if the intent instruction is to start a service B of an application A, the application A is not installed on the in-vehicle infotainment, and the application A is installed on the mobile phone, a type of the intent instruction is an intent of an exclusive type corresponding to the mobile phone. For example, if the intent instruction is to perform navigation, a navigation application needs to be started, the navigation application is installed on both the in-vehicle infotainment and the mobile phone, and the intent instruction can be executed by both the in-vehicle infotainment and the mobile phone, a type of the intent instruction is a non-exclusive type or is not an exclusive type.

When it is determined that the type of the intent instruction is the exclusive type, it is determined that a device corresponding to the exclusive type is the execution device. When it is determined that the type of the intent instruction is not the exclusive type, the execution device may be determined based on a running status of a device, for example, whether the device is running an application that can execute the current intent instruction, or whether an application displayed on an interface of the device is an application that can execute the current intent instruction. If the device is running the application that can execute the current intent instruction or the application displayed on the interface of the device is the application that can execute the current intent instruction, the device that is running the application that can execute the current intent instruction or the device that displays the interface of the application that can execute the current intent instruction is determined as the execution device.

For example, after the voice assistant of the mobile phone is woken up, the mobile phone receives a user instruction that is to turn on a vehicle air conditioner, and the intent may be executed only by the in-vehicle infotainment, and is an exclusive type corresponding to the in-vehicle infotainment. In this case, it is determined that a device for executing the user intent is the in-vehicle infotainment, and the intent instruction is sent to the in-vehicle infotainment.

When the user instruction received by the mobile phone is "Navigate to an address A", it is determined that the user intent is of a navigation type, and the intent is not of the exclusive type. In this case, the mobile phone may determine whether a device is running a navigation application or whether an application displayed on an interface of a device is an application that can execute the current intent instruction. For example, if the mobile phone is running the navigation application, and the in-vehicle infotainment does not run the navigation application, the mobile phone is used as the execution device of the user intent. Alternatively, if the mobile phone is running a navigation application in the background, but a navigation application interface is not displayed in the foreground, and the navigation application interface is displayed in the foreground of the in-vehicle infotainment, the in-vehicle infotainment may be preferably selected as the execution device of the intent instruction.

When the received instruction of the user is playing music B, it is determined that the user intent is a music playing intent whose type is not an exclusive type. In this case, the mobile phone may determine the execution device by determining whether a device is running a music application, whether an application that is playing music currently exists, whether a current audio application of a device is a stack top application or a focus application, or the like. For example, if the mobile phone is running the music application, and the in-vehicle infotainment does not run the music application, the mobile phone is used as the execution device of the user intent.

It may be understood that the foregoing example in this application is merely an example for description, and this application may include but is not limited to the foregoing manner of determining the execution device. In this embodiment of this application, an execution device that better conforms to a user habit can be determined based on the type of the intent instruction, the current running status of the device, and the like, so that user experience is improved.

In addition, in some embodiments, the execution device may parse the intent instruction of the user to obtain an intent parameter and a slot parameter that correspond to the intent instruction, and invoke the intent parameter and the slot parameter that correspond to the intent instruction of the user to execute the intent instruction of the user. The intent parameter may be a feature parameter that represents a user intent type, for example, map navigation, air conditioner control, or music playing control. The slot parameter may be a specific detail feature parameter corresponding to the feature parameter of the user intent type. For example, a specific detail feature parameter corresponding to map navigation may be a navigation destination, a specific detail feature parameter corresponding to air conditioner control may be a specific temperature, and a specific detail feature parameter corresponding to music playing control may be a song name, an album name, a singer, a music label (for example, a language, a musical instrument, a style, an emotion, an age, a singer gender, or a ranking list), a playing application name, or the like.

For example, if the intent instruction of the user is "Navigate to an address A", an intent parameter corresponding to the intent instruction of the user may be "Map navigation", and a slot parameter may be a destination address: "Address A" that needs to be navigated to in the application.

For example, the intent instruction of the user is "Adjust a temperature of an air conditioner to 26°C". In this case, the intent parameter corresponding to the intent instruction of the user is "Air conditioner control", and the slot parameter is a temperature "26°C".

For example, if the intent instruction of the user is "Play music A of Mr. Liu by using Huawei Music", the corresponding intent parameter may be "Music playing control", and the slot parameter may be Music A, Mr. Liu, and Huawei Music.

It may be understood that, in this embodiment of this application, the execution device executes the intent instruction based on the intent parameter and the slot parameter, so that the intent instruction of the user can be accurately executed. In addition, a voice assistant of one device may be woken up to accurately control an in-application function of another device.

In some embodiments, the execution device may alternatively be determined by the in-vehicle infotainment.

609: The mobile phone sends, to the in-vehicle infotainment, video stream data obtained by encoding an application interface in the execution process.

The mobile phone may project an interface in a process of executing the intent instruction to the in-vehicle infotainment for display. For example, in a process of running the navigation application, the mobile phone may project an interface of the navigation application to the in-vehicle infotainment for display.

In some embodiments, the mobile phone may encode the application interface into video stream data, and send the video stream data to the in-vehicle infotainment. After receiving the video stream data, the in-vehicle infotainment may decode the video stream data to obtain decoded data, and draw, based on the decoded data, a corresponding application interface for display.

In some embodiments, the mobile phone may alternatively select, according to a user requirement, whether to project an interface in a process of executing the intent instruction to the in-vehicle infotainment for display. For example, an intent type for which the interface in the process of executing the intent instruction needs to be projected to the in-vehicle infotainment for display and an intent type for which the interface in the process of executing the intent instruction does not need to be projected to the in-vehicle infotainment for display may be stored in the mobile phone. For example, an intent type for which interface data in the execution process needs to be sent may include a navigation type and the like. An intent type for which interface data in the execution process does not need to be sent may include a music play type and the like.

In some embodiments, the mobile phone may alternatively send a query instruction through voice broadcast or in any other implementable manner, so that the user chooses whether to project the interface in the process of executing the intent instruction to the in-vehicle infotainment for display. For example, the mobile phone may broadcast "Whether projection to the in-vehicle infotainment for display is needed". When the user selects "Yes", the mobile phone may project the interface in the process of executing the intent instruction to the in-vehicle infotainment for display.

610: The in-vehicle infotainment decodes the video stream data, and draws a corresponding interface based on decoded data for display.

It may be understood that, in this embodiment of this application, a manner in which the in-vehicle infotainment displays an interface may be set according to an actual requirement, for example, a projection interface of the mobile phone may be displayed in full screen, or may be displayed in split screen. For example, an original interface of the in-vehicle infotainment is displayed in a first screen area, and the projection interface of the mobile phone is displayed in a second screen area. In this way, the user can conveniently view interfaces of the in-vehicle infotainment and the mobile phone, so that user experience is improved]

Based on the foregoing solution, when the user wakes up a mobile phone assistant, the mobile phone does not directly project current display interface data to the in-vehicle infotainment, but sends only the voice interaction data in the voice interaction process to the in-vehicle infotainment, and the in-vehicle infotainment draws interaction interfaces such as an interaction animation effect and an interaction text. In this way, interaction between the user and an HMI of the in-vehicle infotainment is not interrupted, and user experience is improved.

When an intent is executed, the mobile phone may project, according to a user requirement, a corresponding application interface to the in-vehicle infotainment for display. This facilitates viewing by the user and improves user experience. In addition, the voice interaction data includes wake-up animation effect data. In this way, the in-vehicle infotainment may obtain an entry for waking up the voice assistant, so that the user may control use of an application of the mobile phone through the in-vehicle infotainment, that is, may use a voice assistant collaboration function.

In addition, based on the foregoing solution, a voice assistant of one device may be woken up to accurately control an application of another device. For example, an application shared by the mobile phone to the in-vehicle infotainment through interconnection may be consistent with a native application of the in-vehicle infotainment in voice interaction experience of the in-vehicle infotainment, so that user experience is improved.

It may be understood that steps of the interaction method shown in FIG. 6 in this embodiment of this application may include more or fewer steps than the foregoing steps. In addition, although the steps in the flowchart in this embodiment of this application are sequentially displayed according to indication of arrows, these steps are not necessarily performed in the sequence indicated by the arrows. Execution of these steps is not strictly limited to a sequence, and the steps may be performed in any other sequence. In addition, at least some steps in the figure may include a plurality of sub-steps or a plurality of phases. These sub-steps or phases are not necessarily performed and completed at a same moment, but may be performed at different moments. The sub-steps or phases are not necessarily performed in sequence, but may be performed in turn or alternately with another step or at least a portion of sub-steps or phases of the another step.

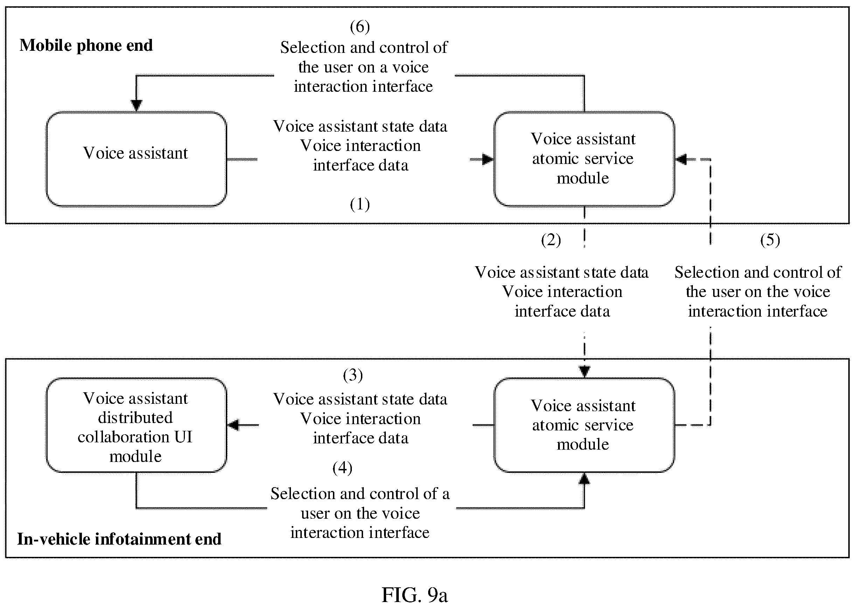

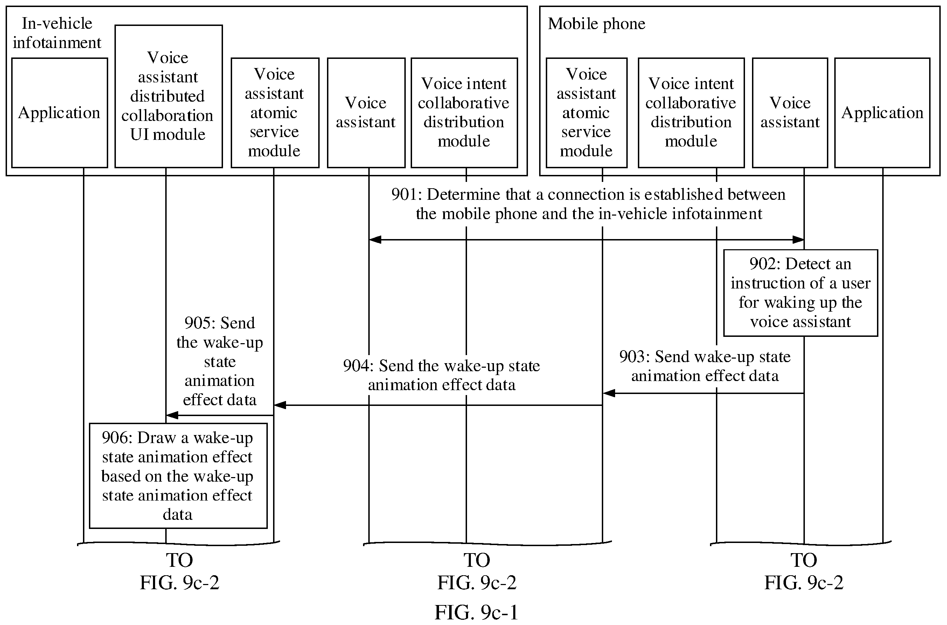

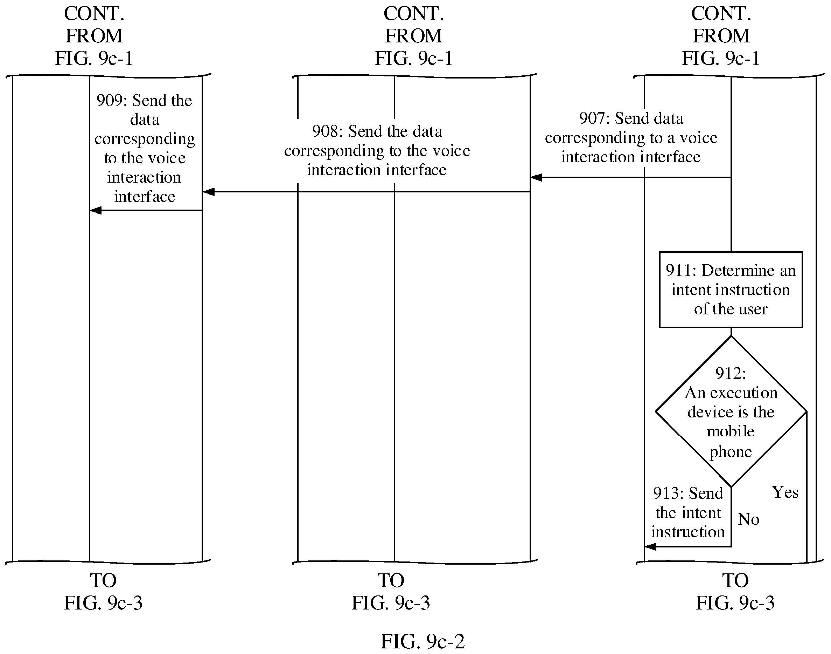

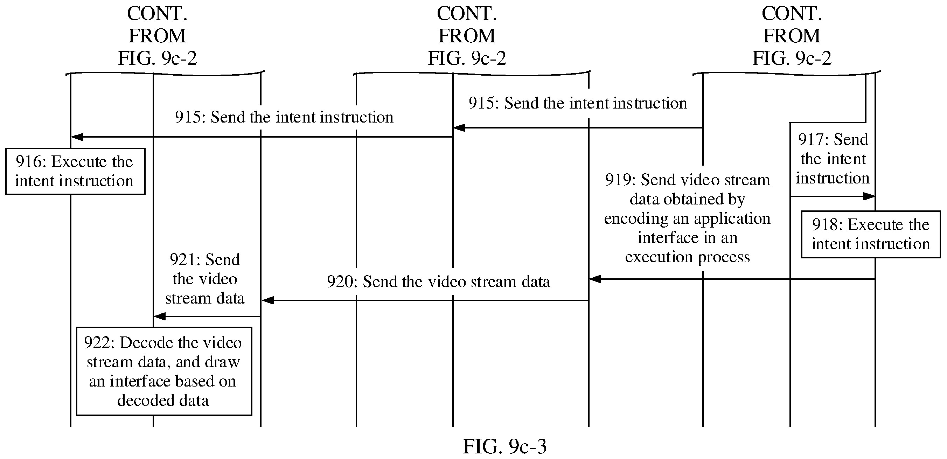

Based on the foregoing software architectures of the mobile phone and the in-vehicle infotainment, the following briefly describes a process of transferring data (including voice assistant state data, voice interaction interface data, and the like) in a voice interaction process in the mobile phone, and reversely controlling the in-vehicle infotainment in this application. As shown in FIG. 9a, the process may include the following steps.
(1) The voice assistant of the mobile phone sends the voice assistant state data (or referred to as data corresponding to a voice image state animation effect GUI) and the voice interaction interface data (or referred to as a voice interaction GUI) to a voice assistant atomic service module of the mobile phone.
(2) The voice assistant atomic service module of the mobile phone sends the voice assistant state data and the voice interaction interface data to a voice assistant atomic service module of the in-vehicle infotainment.
(3) The voice assistant atomic service module of the in-vehicle infotainment sends the voice assistant state data and the voice interaction interface data to a voice assistant distributed collaboration UI module of the in-vehicle infotainment, and the voice assistant distributed collaboration UI module of the in-vehicle infotainment draws a voice assistant state animation effect and a voice interaction interface based on the voice assistant state data and the voice interaction interface data.
(4) The voice assistant distributed collaboration UI module on the in-vehicle infotainment end detects control of the user on the voice interaction interface, and sends corresponding control information to the voice assistant atomic service module of the in-vehicle infotainment.
(5) The voice assistant atomic service module of the in-vehicle infotainment sends the corresponding control information to the voice assistant atomic service module of the mobile phone.
(6) The voice assistant atomic service module of the mobile phone sends the corresponding control information to the voice assistant of the mobile phone, and the voice assistant of the mobile phone makes a corresponding response.

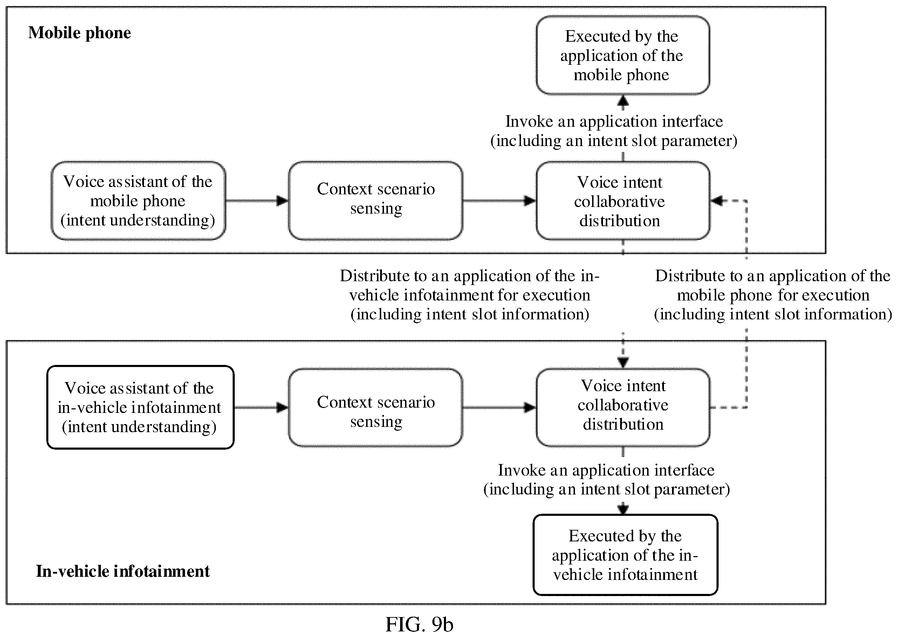

The following briefly describes a process of collaboratively distributing a voice assistant intent. As shown in FIG. 9b, after the voice assistant of the mobile phone is woken up, and intent understanding is performed on a voice instruction of the user to determine an intent instruction of the user, an execution device of the intent instruction may be determined based on context scenario sensing, to be specific, the execution device of the intent instruction is determined based on a type of the intent instruction (whether the type of the intent instruction is an exclusive type that can be executed only by the in-vehicle infotainment or the mobile phone), a current running status of the vehicle, and a current running status of the mobile phone (for example, whether an application that can execute the intent instruction of the user is currently running on the device), and the like. When it is determined that the execution device is the in-vehicle infotainment, the voice assistant of the mobile phone sends the intent instruction to a voice intent collaborative distribution module of the mobile phone, the voice intent collaborative distribution module of the mobile phone sends the intent instruction to a voice intent collaborative distribution module of the in-vehicle infotainment, and the voice intent collaborative distribution module of the in-vehicle infotainment may invoke a corresponding application to execute the intent instruction. When it is determined that the execution device is the mobile phone, the voice assistant of the mobile phone may directly invoke a corresponding mobile phone application to execute the intent instruction. The execution application may invoke an intent parameter and a slot parameter that correspond to the intent instruction of the user, to execute a user intent.

Similarly, after the voice assistant of the in-vehicle infotainment is woken up and it is determined that the user intent is executed, the execution device may still be determined in the same manner as the mobile phone, and the intent instruction is distributed to the corresponding execution device through the voice intent collaborative distribution module of the in-vehicle infotainment and the voice intent collaborative distribution module of the mobile phone.

The following describes the interaction method in this embodiment of this application by using an example in which the first electronic device is a mobile phone, the second electronic device is an in-vehicle infotainment, and a voice assistant of the mobile phone is woken up with reference to the software architectures of the mobile phone and the in-vehicle infotainment. FIG. 9c-1 to FIG. 9c-3 are a diagram of an interaction method according to an embodiment of this application. As shown in FIG. 9c-1 to FIG. 9c-3, the interaction method may include the following steps.

901: A voice assistant of a mobile phone and a voice assistant of an in-vehicle infotainment determine that a connection is established between the mobile phone and the in-vehicle infotainment.

It may be understood that a manner in which the mobile phone establishes the connection to the in-vehicle infotainment may be any implementable manner of connection between the mobile phone and the in-vehicle infotainment through Bluetooth, Wi-Fi, a USB, or the like.

902: The voice assistant of the mobile phone detects an instruction of a user for waking up the voice assistant.

A manner in which the voice assistant of the mobile phone is woken up may be any implementable manner like a manner in which the user uses a control button of a vehicle or a voice wake-up word corresponding to the mobile phone.

903: The voice assistant of the mobile phone sends wake-up state animation effect data to a voice assistant atomic service module of the mobile phone.

904: The voice assistant atomic service module of the mobile phone sends the wake-up state animation effect data to a voice assistant atomic service module of the in-vehicle infotainment.

905: The voice assistant atomic service module of the in-vehicle infotainment sends the wake-up state animation effect data to a voice assistant distributed collaboration UI module of the in-vehicle infotainment.

906: The voice assistant distributed collaboration UI module of the in-vehicle infotainment draws a wake-up state animation effect based on the wake-up state animation effect data.

It may be understood that, if the in-vehicle infotainment currently displays a first interface, and the first interface includes first display content, when the voice assistant distributed collaboration UI module of the in-vehicle infotainment receives the wake-up state animation effect data, the wake-up state animation effect (namely, second display content) may be drawn, based on the wake-up state animation effect data, on the first display content of the in-vehicle infotainment. In this case, the in-vehicle infotainment displays a second interface, where the second interface includes the first display content and the second display content.

907: The voice assistant of the mobile phone sends data corresponding to voice interaction content to the voice assistant atomic service module of the mobile phone.

It may be understood that, in this embodiment of this application, the voice interaction content may include a voice interaction GUI, for example, a voice prompt GUI and a voice image state animation effect GUI (for example, a voice listening state animation effect and a voice broadcast state animation effect). The voice prompt GUI may include user ASR text display, smart tips, a GUI for multi-round user selection, and the like. The voice image state animation effect GUI may include a voice listening state animation effect, a voice broadcast state animation effect, and the like.

908: The voice assistant atomic service module of the mobile phone sends the data corresponding to the voice interaction content to the voice assistant atomic service module of the in-vehicle infotainment.

909: The voice assistant atomic service module of the in-vehicle infotainment sends the data corresponding to the voice interaction content to the voice assistant distributed collaboration UI module of the in-vehicle infotainment.

910: A distributed collaboration interface module of the in-vehicle infotainment draws a voice interaction interface based on the data corresponding to the voice interaction content.

It may be understood that the distributed collaboration UI module of the in-vehicle infotainment may draw, based on the data corresponding to the voice interaction content, the voice interaction interface on a current display interface of the in-vehicle infotainment.

911: The voice assistant of the mobile phone determines an intent instruction of the user.

912: The voice assistant of the mobile phone determines whether an execution device of the intent instruction is the mobile phone. If yes, go to 917. If no, go to 913.

It may be understood that, in this embodiment of this application, after determining the intent instruction of the user, the voice assistant of the mobile phone may determine the execution device of the intent instruction. In some embodiments, the voice assistant of the mobile phone may determine, based on a type of a user intent, a running status of the mobile phone, and a running status of the in-vehicle infotainment, for example, whether an application that can execute the intent and that is in a running status exists on the mobile phone and the in-vehicle infotainment, a device that executes the user intent.

In some embodiments, the voice assistant of the mobile phone may first determine whether a type of the intent instruction is an exclusive type, where the exclusive type is an intent that may be executed only by the in-vehicle infotainment or the mobile phone. When it is determined that the type of the intent instruction is the exclusive type, it is determined that a device corresponding to the exclusive type is the execution device. When it is determined that the type of the intent instruction is not the exclusive type, the execution device may be determined based on a running status of a device, for example, whether the device is running an application that can execute the current intent instruction, or whether an application displayed on an interface of the device is an application that can execute the current intent instruction. If the device is running the application that can execute the current intent instruction or the application displayed on the interface of the device is the application that can execute the current intent instruction, the device that is running the application that can execute the current intent instruction or the device that displays the interface of the application that can execute the current intent instruction is determined as the execution device.

913: The voice assistant of the mobile phone sends the intent instruction to a voice intent collaborative distribution module of the mobile phone.

914: The voice intent collaborative distribution module of the mobile phone sends the intent instruction to a voice intent collaborative distribution module of the in-vehicle infotainment.

915: The voice intent collaborative distribution module of the in-vehicle infotainment sends the intent instruction to a corresponding application of the in-vehicle infotainment.

916: The corresponding application of the in-vehicle infotainment executes the intent instruction.

917: The voice assistant of the mobile phone sends the intent instruction to a corresponding application of the mobile phone.

918: The corresponding application of the mobile phone executes the intent instruction.

919: The corresponding application of the mobile phone sends, to the voice assistant atomic service module of the mobile phone, video stream data obtained by encoding an application interface in an execution process.

In some embodiments, a mobile phone application may alternatively choose, according to a user requirement, whether to send interface data in the execution process to the mobile phone voice assistant atomic service module of the mobile phone. For example, an intent type for which the interface data in the execution process needs to be sent and an intent type for which the interface data in the execution process does not need to be sent may be stored in the mobile phone. For example, the intent type for which the interface data in the execution process needs to be sent may include a navigation type and the like. The intent type for which the interface data in the execution process does not need to be sent may include a music play type and the like. When a current intent instruction of the user is of the intent type for which the interface data in the execution process needs to be sent, the interface data in the process of executing the intent instruction is sent to the mobile phone voice assistant atomic service module of the mobile phone, so that the mobile phone voice assistant atomic service module of the mobile phone sends the interface data in the execution process to the voice assistant atomic service module of the in-vehicle infotainment.

920: The voice assistant atomic service module of the mobile phone sends the video stream data to the voice assistant atomic service module of the in-vehicle infotainment.

921: The voice assistant atomic service module of the in-vehicle infotainment sends the video stream data to the distributed collaboration UI module of the in-vehicle infotainment.

922: The distributed collaboration UI module of the in-vehicle infotainment decodes the video stream data, and draws an interface based on decoded data.

It may be understood that the distributed collaboration UI module of the in-vehicle infotainment may draw a corresponding interface based on the interface data, and the in-vehicle infotainment may display a projection interface of the mobile phone.

It may be understood that, in this embodiment of this application, a manner in which the in-vehicle infotainment displays an interface may be set according to an actual requirement, for example, a projection interface of the mobile phone may be displayed in full screen, or may be displayed in split screen. For example, an original interface of the in-vehicle infotainment is displayed in a first screen area, and the projection interface of the mobile phone is displayed in a second screen area. In this way, the user can conveniently view interfaces of the in-vehicle infotainment and the mobile phone, so that user experience is improved.

It may be understood that steps of the interaction method shown in FIG. 9c-1 to FIG. 9c-3 in this embodiment of this application may include more or fewer steps than the foregoing steps. In addition, although the steps in the flowchart in this embodiment of this application are sequentially displayed according to indication of arrows, these steps are not necessarily performed in the sequence indicated by the arrows. Execution of these steps is not strictly limited to a sequence, and the steps may be performed in any other sequence. In addition, at least some steps in the figure may include a plurality of sub-steps or a plurality of phases. These sub-steps or phases are not necessarily performed and completed at a same moment, but may be performed at different moments. The sub-steps or phases are not necessarily performed in sequence, but may be performed in turn or alternately with another step or at least a portion of sub-steps or phases of the another step.

The following describes the interaction method in this embodiment of this application by using an example in which the first electronic device is a mobile phone, the second electronic device is an in-vehicle infotainment, and a voice assistant of the in-vehicle infotainment is woken up with reference to the software architectures of the mobile phone and the in-vehicle infotainment. FIG. 10A and FIG. 10B are a diagram of an interaction method according to an embodiment of this application. As shown in FIG. 10A and FIG. 10B, the interaction method may include the following steps.

1001: A voice assistant of a mobile phone and a voice assistant atomic service module of an in-vehicle infotainment determine that a connection is established between the mobile phone and the in-vehicle infotainment.

1002: A voice assistant of the in-vehicle infotainment detects an instruction of a user for waking up the voice assistant.

A manner in which the voice assistant of the in-vehicle infotainment is woken up may be any implementable manner like a manner in which the user uses a control button of a vehicle or a voice wake-up word corresponding to the mobile phone.

1003: The voice assistant of the in-vehicle infotainment draws a wake-up state animation effect and a voice interaction interface in a voice interaction process.

1004: The voice assistant of the in-vehicle infotainment determines an intent instruction of the user.

1005: The voice assistant of the in-vehicle infotainment determines whether an execution device of the intent instruction is the mobile phone. If yes, go to 1006. If no, go to 1014.

1006: The voice assistant of the in-vehicle infotainment sends the intent instruction to a voice intent collaborative distribution module of the in-vehicle infotainment.

1007: The voice intent collaborative distribution module of the in-vehicle infotainment sends the intent instruction to a voice intent collaborative distribution module of the mobile phone.

1008: The voice intent collaborative distribution module of the mobile phone sends the execution instruction to a corresponding application of the mobile phone.

1009: The corresponding application of the mobile phone executes the intent instruction.

1010: The corresponding application of the mobile phone sends, to a voice assistant atomic service module of the mobile phone, video stream data obtained by encoding an application interface in an execution process.

1011: The voice assistant atomic service module of the mobile phone sends the video stream data to the voice assistant atomic service module of the in-vehicle infotainment.

1012: The voice assistant atomic service module of the in-vehicle infotainment sends the video stream data to a distributed collaboration UI module of the in-vehicle infotainment.

1013: The distributed collaboration UI module of the in-vehicle infotainment decodes the video stream data, and draws an interface based on decoded data.

1014: The voice assistant of the in-vehicle infotainment sends the intent instruction to a corresponding application of the in-vehicle infotainment.

1015: The corresponding application of the in-vehicle infotainment executes the intent instruction.

It may be understood that steps of the interaction method shown in FIG. 10A and FIG. 10B in this embodiment of this application may include more or fewer steps than the foregoing steps. In addition, although the steps in the flowchart in this embodiment of this application are sequentially displayed according to indication of arrows, these steps are not necessarily performed in the sequence indicated by the arrows. Execution of these steps is not strictly limited to a sequence, and the steps may be performed in any other sequence. In addition, at least some steps in the figure may include a plurality of sub-steps or a plurality of phases. These sub-steps or phases are not necessarily performed and completed at a same moment, but may be performed at different moments. The sub-steps or phases are not necessarily performed in sequence, but may be performed in turn or alternately with another step or at least a portion of sub-steps or phases of the another step.

With reference to FIG. 11a and FIG. 11b-1 to FIG. 11b-3, the following further describes the voice assistant collaborative interaction method in the embodiments of this application.

FIG. 11a shows a specific deployment solution for implementing a voice mutual assistance capability. As shown in FIG. 11a, the specific deployment solution in this embodiment of this application is to deploy a voice assistant atomic service module and a voice assistant distributed collaboration UI (or referred to as a distributed Voice-HMI) module on an in-vehicle infotainment end, and enable a voice atomization capability on a corresponding mobile phone end (for example, deploy a voice assistant atomic service module on a mobile phone end). Specifically, for the voice assistant atomic service module deployed on the in-vehicle infotainment end, the mobile phone end enables a voice assistant state capability (that is, may send voice assistant state data to the in-vehicle infotainment end), and a voice assistant interaction GUI interface data capability of the mobile phone end (that is, may send data corresponding to a voice interaction GUI to the in-vehicle infotainment end), to implement a voice assistant mutual assistance capability between the in-vehicle infotainment and the mobile phone, for example, a voice assistant state capability and a voice assistant interaction GUI capability, that is, to implement that the in-vehicle infotainment receives voice assistant state data (for example, idle state data, wake-up listening state data, and broadcast state data) and draws corresponding state animation effects (for example, an idle state animation effect, a wake-up listening state animation effect, and a broadcast state animation effect), and the in-vehicle infotainment receives voice interaction interface data (for example, ASR text data, smart tips data, and multi-round data and selection) and draws interaction interfaces.

FIG. 11b-1 to FIG. 11b-3 are a diagram of an interaction method based on interface display content of an in-vehicle infotainment, to further describe a collaborative interaction process between a mobile phone and the in-vehicle infotainment. As shown in FIG. 11b-1 to FIG. 11b-3, the interaction method may include the following steps.

1101: A distributed collaboration UI module of the mobile phone and a distributed collaboration UI module of the in-vehicle infotainment determine that a connection is established between the mobile phone and the in-vehicle infotainment.

1102: The distributed collaboration UI module of the in-vehicle infotainment detects that a user wakes up a voice assistant of the mobile phone by using a button.

In some embodiments, the user may wake up the voice assistant of the mobile phone by using a square control button of a vehicle.

1103: The distributed collaboration UI module of the in-vehicle infotainment sends wake-up information to the voice assistant of the mobile phone.

1104: The voice assistant of the mobile phone enters a voice wake-up state and starts sound reception.

1105: The voice assistant of the mobile phone sends response audio stream data, voice wake-up state animation effect data, and smart voice tips data to the distributed UI module of the in-vehicle infotainment.

1106: The distributed UI module of the in-vehicle infotainment controls the in-vehicle infotainment to play a response, and displays a voice wake-up state animation effect, and smart tips.

1107: The distributed collaboration UI module of the in-vehicle infotainment performs sound reception, and sends audio stream data to the voice assistant of the mobile phone.

1108: The voice assistant of the mobile phone performs speech recognition based on the audio stream data.

1109: The voice assistant of the mobile phone sends recognized ASR text data to the distributed collaboration UI module of the in-vehicle infotainment.

1110: The distributed collaboration UI module of the in-vehicle infotainment controls the in-vehicle infotainment to display an ASR text.

1111: The voice assistant of the mobile phone performs intent understanding, and obtains audio stream data in voice broadcast.

1112: The voice assistant of the mobile phone sends the audio stream data in voice broadcast and a voice broadcast state animation effect to the distributed collaboration UI module of the in-vehicle infotainment.

1113: The distributed collaboration UI module displays the voice broadcast state animation effect and controls the in-vehicle infotainment to perform voice broadcast.

1114: The voice assistant of the mobile phone obtains GUI data of a plurality of rounds of dialogs.

1115: The voice assistant of the mobile phone sends the GUI data of the plurality of rounds of dialogs to the distributed collaboration UI module of the in-vehicle infotainment.

1116: The distributed collaboration UI module of the in-vehicle infotainment controls the in-vehicle infotainment to display a GUI widget of the plurality of rounds of dialogs.

1117: The distributed collaboration UI module of the in-vehicle infotainment obtains an intent instruction selected by the user.

1118: The distributed collaboration UI module of the in-vehicle infotainment sends the intent instruction selected by the user to the mobile phone.

1119: The voice assistant of the mobile phone determines an execution device based on the intent instruction.

1120: When determining that the execution device is the mobile phone, the voice assistant of the mobile phone sends the intent instruction to a corresponding application of the mobile phone.

1121: When determining that the execution device is the in-vehicle infotainment, the voice assistant of the mobile phone sends the intent instruction to a corresponding application of the in-vehicle infotainment.

It may be understood that the voice assistant of the mobile phone sends the intent instruction to the voice intent collaborative distribution module of the mobile phone. The voice intent collaborative distribution module of the mobile phone sends the intent instruction to the voice intent collaborative distribution module of the in-vehicle infotainment. The voice intent collaborative distribution module of the in-vehicle infotainment sends the intent instruction to an application of the in-vehicle infotainment.

1122: Project the corresponding application of the mobile phone to the in-vehicle infotainment according to an actual requirement.

In some embodiments, the mobile phone may alternatively select, according to a user requirement, whether to project an interface in a process of executing the intent instruction to the in-vehicle infotainment for display. For example, an intent type for which the interface in the process of executing the intent instruction needs to be projected to the in-vehicle infotainment for display and an intent type for which the interface in the process of executing the intent instruction does not need to be projected to the in-vehicle infotainment for display may be stored in the mobile phone. For example, an intent type for which interface data in the execution process needs to be sent may include a navigation type and the like. The intent type for which the interface data in the execution process does not need to be sent may include a music play type and the like.

1123: The voice assistant of the mobile phone detects that voice activity detection (Voice Activity Detection, VAD) timeout duration is greater than a specified value, and exits a voice state.

1124: The voice assistant of the mobile phone sends voice exit state animation effect data to the in-vehicle infotainment.

1125: The distributed collaboration UI module of the in-vehicle infotainment controls the in-vehicle infotainment to display a voice exit state animation effect.

Based on the foregoing solution, when the user wakes up a mobile phone assistant, the mobile phone does not directly project current display interface data to the in-vehicle infotainment, but sends only the voice interaction data in the voice interaction process to the in-vehicle infotainment, and the in-vehicle infotainment draws interaction interfaces such as an interaction animation effect and an interaction text. In this way, interaction between the user and an HMI of the in-vehicle infotainment is not interrupted, and user experience is improved.

When an intent is executed, the mobile phone may project, according to a user requirement, a corresponding application interface to the in-vehicle infotainment for display. This facilitates viewing by the user and improves user experience. In addition, the voice interaction data includes wake-up animation effect data. In this way, the in-vehicle infotainment may obtain an entry for waking up the voice assistant, so that the user may control use of an application of the mobile phone through the in-vehicle infotainment, that is, may use a voice assistant collaboration function.

In addition, based on the foregoing solution, a voice assistant of one device may be woken up to accurately control an application of another device. For example, an application shared by the mobile phone to the in-vehicle infotainment through interconnection may be consistent with a native application of the in-vehicle infotainment in voice interaction experience of the in-vehicle infotainment, so that user experience is improved.

It may be understood that steps of the interaction method shown in FIG. 6 in this embodiment of this application may include more or fewer steps than the foregoing steps. In addition, although the steps in the flowchart in this embodiment of this application are sequentially displayed according to indication of arrows, these steps are not necessarily performed in the sequence indicated by the arrows. Execution of these steps is not strictly limited to a sequence, and the steps may be performed in any other sequence. In addition, at least some steps in the figure may include a plurality of sub-steps or a plurality of phases. These sub-steps or phases are not necessarily performed and completed at a same moment, but may be performed at different moments. The sub-steps or phases are not necessarily performed in sequence, but may be performed in turn or alternately with another step or at least a portion of sub-steps or phases of the another step.

Embodiments disclosed in this application may be implemented in hardware, software, firmware, or a combination of these implementation methods. Embodiments of this application may be implemented as a computer program or program code executed on a programmable system. The programmable system includes at least one processor, a storage system (including volatile and non-volatile memories and/or a storage element), at least one input device, and at least one output device.

The program code may be applied to input instructions, to perform functions described in this application and generate output information. The output information may be applied to one or more output devices in a known manner. For a purpose of this application, a processing system includes any system with a processor like a digital signal processor (DSP), a microcontroller, an application-specific integrated circuit (ASIC), or a microprocessor.

The program code may be implemented in a high-level programming language or an object-oriented programming language to communicate with the processing system. The program code may alternatively be implemented in an assembly language or a machine language when required. Actually, the mechanism described in this application is not limited to a scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed through a network or by another computer-readable medium. Therefore, the machine-readable medium may include any mechanism for storing or transmitting information in a machine (for example, a computer) readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine (for example, computer)-readable form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problems proposed in this application is not introduced in the foregoing device embodiments of this application. This does not mean that there are no other units/modules in the foregoing device embodiments.

It should be noted that, in examples and the specification of this patent, relational terms such as first and second are only used to distinguish one entity or operation from another entity or operation, and do not necessarily require or imply that any actual relationship or sequence exists between these entities or operations. Moreover, the terms "include", "contain", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device that includes the element.

Although this application has been illustrated and described with reference to some preferred embodiments of this application, a person of ordinary skill in the art should understand that various changes may be made to this application in form and detail without departing from the scope of this application.

## Claims

1. An interaction method, comprising:
establishing, by a first electronic device, a connection to a second electronic device, and displaying, by the second electronic device, a first interface, wherein the first interface comprises first display content;
detecting, by the first electronic device, a wake-up instruction of a voice assistant;
sending, by the first electronic device, first data corresponding to the wake-up instruction to the second electronic device, wherein the first data comprises data corresponding to a voice wake-up state animation effect; and
displaying, by the second electronic device, a second interface based on the first data and the first display content, wherein the second interface comprises the first display content and second display content corresponding to the first data.

2. The method according to claim 1, wherein the method comprises: displaying, by the second electronic device, a third interface in response to an interaction operation between a user and the first electronic device, wherein the third interface comprises the first display content and third display content corresponding to the interaction operation.

3. The method according to claim 2, wherein the third display content comprises voice interaction content and a voice interaction state animation effect that correspond to the interaction operation.

4. The method according to claim 3, wherein the voice interaction content comprises a text corresponding to a voice instruction of the user, smart tips, and intent understanding content; and
the voice interaction state animation effect comprises a listening animation effect or a broadcast animation effect.

5. The method according to claim 3 or 4, wherein the displaying, by the second electronic device, a third interface in response to an interaction operation between a user and the first electronic device comprises:
sending, by the first electronic device, data corresponding to the voice interaction content and data corresponding to the voice interaction state animation effect to the second electronic device in response to the interaction operation between the user and the first electronic device; and
displaying, by the second electronic device, the third interface based on the data corresponding to the voice interaction content, the data corresponding to the voice interaction state animation effect, and the first display content.

6. The method according to any one of claims 1 to 5, further comprising: detecting, by the first electronic device, an intent instruction of the user, and determining an execution device of the intent instruction based on a type of the intent instruction, a current running status of the first electronic device, and a current running status of the second electronic device; and
when determining that the execution device of the intent instruction is the second electronic device, sending, by the first electronic device, the intent instruction to the second electronic device.

7. The method according to claim 6, further comprising: obtaining, by the second electronic device, an intent parameter and a slot parameter based on the intent instruction, and executing the intent instruction based on the intent parameter and the slot parameter.

8. The method according to claim 6, wherein the determining an execution device of the intent instruction based on a type of the intent instruction, a current running status of the first electronic device, and a current running status of the second electronic device comprises:
when the type of the intent instruction is an exclusive type, determining that the execution device of the intent instruction is an execution device corresponding to the exclusive type; or
when the intent instruction is not of an exclusive type, determining the execution device of the intent instruction based on the current running status of the first electronic device and the current running status of the second electronic device.

9. The method according to claim 8, wherein the determining the execution device of the intent instruction based on the current running status of the first electronic device and the current running status of the second electronic device comprises:
using a device that is running a first application or that displays an interface of the first application and that is in the first electronic device and the second electronic device as the execution device of the intent instruction, wherein the first application is an application capable of executing the intent instruction.

10. The method according to claim 8 or 9, wherein when the execution device of the intent instruction is the first electronic device, and the type of the intent instruction is a preset type for which an execution process does not need to be projected for display, the method comprises: skipping sending, by the first electronic device to the second electronic device, data corresponding to a display interface in the execution process of the intent instruction.

11. The method according to claim 8 or 9, wherein when the execution device of the intent instruction is the first electronic device, and the type of the intent instruction is a preset type for which an execution process needs to be projected for display, the method comprises: sending, by the first electronic device to the second electronic device, the first data corresponding to a display interface in the execution process of the intent instruction; and
displaying, by the first electronic device, a fourth interface based on the first data corresponding to the display interface.

12. The method according to claim 11, wherein the fourth interface comprises the first display content and fourth display content corresponding to the first data.

13. The method according to claim 12, wherein the first display content and the fourth display content are displayed in different areas of a screen of the first electronic device.

14. The method according to claim 11, wherein the fourth interface comprises fourth display content corresponding to the first data.

15. The method according to any one of claims 1 to 14, wherein the first data does not comprise interface data corresponding to a current application interface of the first electronic device.

16. The method according to any one of claims 1 to 15, wherein the first electronic device is a mobile phone, and the second electronic device is an in-vehicle infotainment.

17. An electronic device, comprising:
a memory, configured to store a computer program, wherein the computer program comprises program instructions; and
a processor, configured to execute the program instructions, to enable the electronic device to perform the interaction method according to any one of claims 1 to 16.

18. A computer-readable storage medium, wherein the computer-readable storage medium stores a computer program, the computer program comprises program instructions, and the program instructions are run by an electronic device to enable the electronic device to perform the interaction method according to any one of claims 1 to 16.
